(19) Europäisches Patentamt
European Patent Office
Office européen des brevets

(11) EP 1 079 361 A1

(12) **EUROPEAN PATENT APPLICATION**

(43) Date of publication:
**28.02.2001 Bulletin 2001/09**

(51) Int. Cl.$^7$: **G09G 3/32**, G09G 3/14

(21) Application number: **00117930.8**

(22) Date of filing: **21.08.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **20.08.1999 JP 23388999**
**30.09.1999 JP 27894999**
**22.10.1999 JP 30104399**

(71) Applicants:
- **Harness System Technologies Research, Ltd. Nagoya-shi, Aichi (JP)**
- **SUMITOMO WIRING SYSTEMS, Ltd. Yokkaichi-shi, Mie-ken 510 (JP)**
- **SUMITOMO ELECTRIC INDUSTRIES, LTD. Osaka-shi, Osaka 544-8511 (JP)**

(72) Inventors:
- **Tokunaga, Masahiro, c/o Harness System Technol. Nagoya-shi, Aichi (JP)**
- **Ito, Takanori, c/o Harness System Technol. Nagoya-shi, Aichi (JP)**
- **Tomita, Takayuki, c/o Harness System Technol. Nagoya-shi, Aichi (JP)**
- **Matsui, Akinori, c/o Harness System Technol. Nagoya-shi, Aichi (JP)**

(74) Representative: **Kuhnen & Wacker Patentanwaltsgesellschaft mbH, Alois-Steinecker-Strasse 22 85354 Freising (DE)**

(54) **Driver for electroluminescent elements**

(57) A thermistor (TM) is used for detecting ambient temperature of the EL element. One end of the thermistor (TM) is connected to a pull-up resistor (R3) that is connected to a power source Vcc of 5V, while the other end is connected to ground. A voltage derived from a node between the resistor (R3) and the thermistor (TM) is applied to an A/C input port of a microcomputer (MC). The temperature detecting means is not limited to the thermistor (TM), as matter of course. The microcomputer (MC) computes a temperature by using data representative of relationships between output signals of the thermistor (TM) and temperatures, prepared in advance. And it determines an application voltage to the EL element while referring to a data table, which is stored in the computer per se and contains relationships between temperatures and application voltages, stored in the computer.

FIG. 1

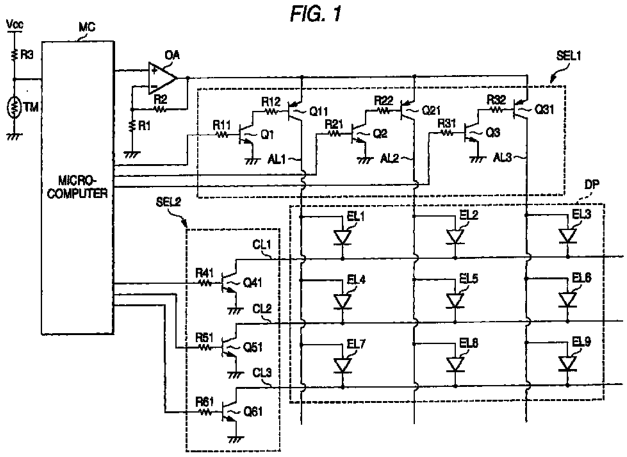


EP 1 079 361 A1

## Description

BACKGROUND OF THE INVENTION

The present invention relates to a drive device for driving electroluminescent (EL) elements, and more particularly to a drive device for driving EL elements which includes means for keeping the luminance of the electroluminescent elements constant.

Recently, development of organic EL elements in which organic material is used for the light emitting portions thereof progresses in order to lower the voltage for driving the EL elements.

The organic EL element is structured such that an anode layer as a transparent electrode made of indium-tin-oxide film (ITO) is layered on a transparent glass substrate. An organic layer of organic material is layered on the anode layer. A cathode layer is formed on the organic layer by vapor deposition. Further, a sealing case of metal is provided covering those layers, whereby a water-tight structure is formed.

Usually, the organic layer consists of a multiple of layers. Those layers are, for example, an electron transport layer, a hole transporting layer, and a light-emitting layer interlayered between the electron and hole transporting layers. The electron transport layer is composed of zinc (II) complex . The hole transport layer is composed of a compound of the amine family. The light-emitting layer is composed of an alumiquinolinol complex.

The EL element utilizes the following mechanism for its light emitting. Electrons and holes that are injected from the electron and hole transporting layers are re-combined in the light-emitting layer, and organic molecules are excited. Light is emitted through the transition of the excited organic molecules to the ground state.

The EL element behaves like the diode. When current is fed through the EL element in the forward direction, the EL element emits light, but the current is fed through the EL element in the reverse direction, it does not emit light.

A constant current drive system in which constant current is fed through the EL element is widely employed for driving the EL elements.

A luminance of the EL element varies depending on a quantity of the feeding current per unit area of the EL element. In the constant current drive system, therefore, it is necessary to adjust a quantity of feeding current depending on a segment area of the EL element. Accordingly, in a system for lighting the EL elements with different segment areas, it is required to use constant current circuits corresponding in number to the segments.

The dynamic characteristic of the EL element will be described with reference to Figs. 8 and 9. Fig. 8 is a graph showing a relationship of luminance of the EL element vs. drive voltage applied to the EL element. The abscissa of the graph represents applied voltage (V), and the ordinate represents luminance (cd/cm$^2$) of the EL element.

In the characteristic shown in Fig. 8, the luminance of the EL element is 100 cd/cm$^2$ when 6V is applied to the EL element, and 300 cd/cm$^2$ when 7V is applied. When such characteristic data is gathered in connection with variation of ambient temperature of the EL element, one can obtain an applied voltage vs. temperature characteristic at fixed luminance values.

Fig. 9 is a graph showing a relationship of the applied voltage vs. temperature at fixed luminance values. The abscissa of the graph represents temperature (°C) and the ordinate represents applied voltage (V).

The EL element has such a characteristic that even if the applied voltage is fixed, the luminance of the EL element decreases as ambient temperature drops, and increases as it rises. In the characteristic shown in Fig. 9, when the ambient temperature is 30°C, the luminance of the EL element is 300 cd/cm$^2$. When it drops to 0°C, the luminance decreases to 70 cd/cm$^2$. It would be surmised that the element characteristic will vary with variation of the ambient temperature. Use of a constant current drive system will suffice for avoiding such a luminance decrease. As described above, in the system for driving the segments of different areas, the constant current circuits corresponding in number to the segments are required. This results in complexity of the circuitry.

The luminance of the EL element sometimes decreases with aging of the EL element. When the luminance decreases, the visibility is deteriorated, so that the product quality of the display unit is impaired. In such a case, even if the constant current drive system is used, it is impossible to prevent the luminance of the EL element from being deteriorated.

The present invention relates to an EL (electroluminescent) display device used for various displays. More particularly, the invention relates to an EL display device which is capable of varying a drive voltage, which is applied to display segments connected to a drive voltage source, for each display segment so that the luminance values of those segments are uniform.

In a conventional EL display device, e.g., an organic EL display device of the fixed segment type in which a plurality of display segments are matrix driven, the anodes of the display segments are arranged into plural groups of anodes. The anodes are connected, for each group, to a drive voltage source by way of a column connection wire. The cathodes of display segments are also arranged into plural groups of cathodes, and the cathodes are earthed, for each group, by way of a row connection wire. Switches are connected to the column and row connection wires. In operation, desired segments are selectively driven to turn on by selectively turning on those switches.

In the organic EL display device described above, a drive voltage source applies a drive voltage to the display segments connected together by the column connection wire. The luminance of each segment varies depending on a current density of the light emitting area. Accordingly, where resistance values of the wire portions each interconnecting the adjacent segments are not uniform, the voltage at the true light emitting portion varies, and hence the luminance values of the display segments will be not uniform.

The present invention relates to a display element drive device for driving one or a plurality of EL elements.

Fig. 24 is a graph showing a relationship between current density and luminance in an organic EL element. In the coordinates, the current density vs. luminance relationship is logarithmically described. Generally, the organic EL element is a light emitting element of the current drive type. As shown in Fig. 24, a luminance depends on a current value per light-emitting unit area, viz., current density. Accordingly, to improve a display quality by making the luminance of the organic EL element uniform, it is essential to accurately set the current density.

Fig. 25 is a circuit diagram of an example of an organic EL element of the dot matrix type. As shown in Fig. 25, in the EL element of the matrix drive type in which each pixel has a fixed area, all pixels may be driven by use of a constant current reference source 1 and a plurality of constant current drivers (source type column drivers) 2a, 2b, ..., 2n, while a display row is selected by a sink row driver 4. In Fig. 25, reference numeral 3 designates an organic EL element.

A display device of the fixed segment type as well as the display device of the dot matrix type is known. The display device of the fixed segment type is limited in variations of the display patterns. However, it has the following advantages. The edge portions of curves and the like are more beautiful than by the display device of the dot matrix type. The process of manufacturing the EL elements is small in process step number, and easy. Accordingly, the display device of the fixed segment type is effectively used where relatively low cost and display quality are required.

Image (segment) areas are different from one another in the display device of the fixed segment type unlike the display device of the matrix type. Accordingly, the drive current values of the segments are different from one another. This fact necessitates the use of a plurality of constant current reference sources where the light emission at uniform luminance is intended.

Fig. 26 is a block diagram showing a conventional display device of the fixed segment type. In this circuit, constant current reference sources 5a to 5n apply reference signals to constant current drivers 6a to 6n, respectively. As a result, organic EL elements 7a to 7n are driven to emit light.

As seen, display patterns are different for each segment in the display device of the fixed segment type. Accordingly, the number and areas of the segment areas are different every system to which the display device is applied. In designing a drive unit including the constant current reference sources 5a to 5n and the current drivers 6a to 6n with the intention of standardizing the display device, it is not preferable to fix the set values of the constant current reference sources 5a to 5n, prepared in advance. This requires a designer to design the drive unit for each display device. Use of the plurality of the constant current reference sources 5a to 5n in itself forms an efficiency hindering factor when the circuit area efficiency is considered.

An approach is allowed in which a constant voltage circuit in lieu of the drive circuit shown in Fig. 26 is used and all the organic EL elements are connected in parallel to the constant voltage circuit. This approach does not need the individual constant current reference sources and is capable of improving the circuit area efficiency.

Generally, the voltage vs. current characteristic of the organic EL element is as shown in Fig. 27. As shown, the current exponentially increases with respect to the voltage. The characteristic teaches that where the constant voltage circuit is used, the current density will greatly vary for a little change of the constant voltage, and hence the luminance of the organic EL element will greatly vary, possibly deteriorating the display quality. For this reason, precise adjustment of the voltage supply section is required, and therefore a complicated voltage stabilizing circuit is essentially used. Particularly, in such an application where the organic EL element within the instrument panel of an automobile is driven by a battery of the automobile, the battery must feed electric power to other loads, such as a power steering and power windows. In this respect, how to stabilize the voltage of the electric power supplied is a present technical subject in this field.

A resistance value of the organic EL element is varied by deterioration of the organic EL element per se, ambient temperature and the like. This will lead to a variation of the drive current. In this case, how to stabilize the luminance of the organic EL element also forms a technical subject.

To cope with those problems, the applicant of the present patent application proposed a novel and unique display element drive device (Proposal) in the Japanese Patent Application No. Hei 10-301188. In the proposed display element drive device, the circuit area efficiency of the drive circuit for display elements is improved and easy in design for standardization. Even when the display element drive device receives power source from the automobile battery whose voltage is easy to vary, the luminance of the EL element little varies. Further, even when its resistance is varied by the element deterioration, the display element drive device is capable of stably keeping the luminance of the EL element, and is excellent in durability.

In our proposal, as shown in Figs. 28 and 29, a plurality of organic EL elements 11a to 11n of the fixed segment type are connected in parallel. A stabilized voltage is applied to the parallel circuit of the EL elements. This arrangement succeeds in eliminating the use of the plural drive reference sources (current sources) which are essential in the conventional device because of the area difference, and uniformizing the luminance values of the EL elements.

To cope with the problems of characteristic variations in the case of the voltage drive and aging, the display element drive device includes current detecting means 31 (drive state detecting means) which measures a value of current flowing through a special organic EL element (referred to as a "reference organic EL element") 11z (reference light-emitting element) provided in addition to the organic EL elements 11a to 11n, and outputs a current value signal varying with this current value detected, a voltage control circuit 32 for converting a current value signal received from the current detecting means 31 into a stabilized voltage adjusting signal, and a stabilized voltage supply circuit 33 for converting a voltage Vin from an instable battery power supply (+B) into a fixed stabilized voltage Vout by use of the stabilized voltage adjusting signal received from the voltage control circuit 32.

The reference organic EL element 11z receives current from the current detecting means 31 to which the reference organic EL element is connected. The remaining organic EL elements 11a to 11n, as shown in Fig. 29, receives currents through given switching circuit (driver circuit) 15 (15a to 15n).

The switching circuit (driver circuits) 15 (15a to 15n) includes PNP transistors Q6 for feeding drive currents Ia to In to organic EL elements 11a to 11n, NPN transistors Q5 for turning on and off the PNP transistors Q6. The base of the PNP transistor Q6 is connected to the collector of the NPN transistor Q5 through a resistor R5. The base of the NPN transistor Q5 is connected to the control means 13 through a resistor R4. The emitters of the NPN transistors Q5 are earthed. Those switching circuits 15(15a to a15n) are connected in parallel, and applied with a stabilized voltage Vout. Those switching circuits 15(15a to a15n) are turned on and off by a switch signal from the control means 13, as shown in Fig. 28.

The current detecting means 31 detects a drive state of the reference organic EL element 11z by detecting a current value to the reference organic EL element 11z. The current detecting means 31 includes a current detecting resistor Rref inserted between the reference organic EL element 11z and the stabilized voltage supply circuit 33, an operational amplifier A-2, and four resistors Rf1 to Rf3 and Rs.

The inverting input terminal of the operational amplifier A-2 is connected through the resistor Rf1 to the output terminal of the operational amplifier A-2 per se, whereby a negative feedback circuit is formed. The resistor Rf2 is connected to a node between the resistor Rref and the reference organic EL element 11z. The noninverting input terminal of the operational amplifier A-2 is connected through the resistor Rs to a node between the current detecting resistor Rref and the stabilized voltage supply circuit 33, and earthed through the resistor Rf3. The operational amplifier A-2 thus connected operates as a differential amplifier for converting voltage across the current detecting resistor Rref into a current value signal V.

A couple of the resistors Rf3 and Rs connected to the noninverting input terminal of the operational amplifier A-2 serve as voltage dividing resistors for the stabilized voltage Vout $(= \mathrm{Ref} \times \mathrm{Iref})$. Assuming that current flowing through the current detecting resistor Rref is Iref, a dividing ratio of the voltage dividing resistors Rf3 and Rs is $\alpha$ $(= \mathrm{Rf3/Rs})$, the current value signal V is given by the following equation (1) when $\mathrm{Rf2} = \mathrm{Rs}$ (i.e., $\alpha = \mathrm{Rf3/Rf2}$), and $\mathrm{Rf1} = \mathrm{Rf3}$.

$$\begin{aligned} V &= \mathrm{Rf3/Rf2}) \times \mathrm{Rre}\ x\ \mathrm{Iref} \\ &= \alpha \times \mathrm{Rref}\ x\ \mathrm{Iref} \end{aligned} \qquad (1)$$

The voltage applied to the reference organic EL element 11z is substantially equal to that applied to the remaining segments (organic EL elements 11a to 11n) if a resistance value of the current detecting resistor Rref is sufficiently smaller than each of the resistance values Rz, and Ra to Rn (Rm) of those segments (organic EL elements 11z, 11a to 11n), and voltage of Iref • Rref is substantially equal to the forward voltage Vce when the PNP transistors Q6 in the switching circuit 15 (15a to 15n) are turned on.

The voltage control circuit 32 is made up of an operational amplifier A-1, a resistor R11, and a Zener diode ZD1 as a constant voltage element. The noninverting input terminal of the operational amplifier A-1 is connected to the cathode of the Zener diode ZD1, and earthed through the Zener diode ZD1. The inverting input terminal of the operational amplifier A-1 is connected to the current detecting means 31. The operational amplifier A-1 controls the output so that the voltage V $(= \alpha \cdot \mathrm{Rref} \cdot \mathrm{Iref})$ applied from the current detecting means 31 to the inverting input terminal thereof is substantially equal to the reverse voltage Vz received through the Zener diode ZD1. The cathode of the Zener diode ZD1 is connected through a resistor R11 to a battery power supply (+B). Incidentally, the output of the operational amplifier A-1 has a positive power value to such an extent that a transistor Q11 always outputs the stabilized voltage Vout.

The stabilized voltage supply circuit 33 consists of one NPN transistor Q11. In the stabilized voltage supply circuit 33, the transistor Q11 converts the voltage Vin received from the battery power supply (+B) into a stabilized voltage Vout as its emitter potential in accordance with a base potential received from the voltage control circuit 32. The stabilized voltage Vout thus obtained is output to all the voltage switching circuit 15 (15a to 15n) and the current detecting resistor Rref of the current detecting means 31.

In the proposal described above, voltage Vin is applied from the battery power supply (+B) through the resistor R11 to the cathode of the Zener diode ZD1 as a constant voltage element. Then, the noninverting input terminal of the operational amplifier A-1 of the voltage control circuit 32 is fixed at a constant voltage Vz of the Zener diode ZD1. The operational amplifier A-1 outputs a stabilized voltage adjusting signal for making the voltage V ( $= \alpha \cdot$ Rref $\cdot$ Iref ) equal to the constant voltage Vz.

The stabilized voltage supply circuit 33 (Q11) receives the stabilized voltage adjusting signal, and converts the instable power supply voltage Vin into a stabilized voltage Vout.

The stabilized voltage Vout is applied to a node of those organic EL elements 11z, and 11a to 11n connected in parallel. Accordingly, the equal voltage (stabilized voltage Vout) is equally applied to all the segments (organic EL elements 11z, and 11a to 11n). Under this condition, current Im (Iref, Ia to In), which is inversely proportional to the resistance value Rm, flows through those segments. Accordingly, an automatic adjustment is performed so as to fix the current densities of the segments at the current density values corresponding to the segment areas. As a result, the luminance of all the segments (organic EL elements 11z, and 11a to 11n) is stable in value while being free from the influence of the variation of the voltage Vin.

Meanwhile, the resistance values of the organic EL elements 11a to 11n, 11z are varied by long time use of those elements and variation of ambient temperature. If the voltage applied to those organic EL elements 11a to 11n, 11z whose resistance values are thus varied, remains fixed, the current values of the currents flowing through the organic EL elements 11a to 11n, 11z are different from those original ones. As a consequence, the luminance values of those EL elements are also different from the original ones.

In this case, the proposed display element drive device adjusts the stabilized voltage Vout in accordance with variations of the resistance values of the organic EL elements 11a to 11n, 11z in the following manner, thereby stably maintaining the luminance values of those EL elements.

The operational amplifier A-2 of the current detecting means 31 functions as a differential amplifier for converting the voltage across the current detecting resistor Rref into a current value signal V. The operational amplifier outputs the current value signal V defined by the equation (1) to the voltage control circuit 32. Upon receipt of the current value signal, the operational amplifier A-1 of the voltage control circuit 32 outputs a stabilized voltage adjusting signal which makes the voltage V ( $= \alpha \cdot$ Rref $\cdot$ Iref ) received at the inverting input terminal from the current detecting means 31 substantially equal to the constant voltage Vz. The cathode electrodes 22 (Q11) adjusts the stabilized voltage Vout, in value in accordance with the output signal of the voltage control circuit 32. Specifically, when a resistance value (Rz) of the reference organic EL element 11z decreases by element performance deterioration, the stabilized voltage Vout also decreases. When the resistance value (Rz) increases, the stabilized voltage Vout also increases. After the resistance value (Rz) varied, such a voltage control as to stabilize the varied voltage Vin into the stabilized voltage Vout dependent on the resistance value (Rz), is still continued, as a matter of course.

Thus, even if the resistance value (Rz) of the reference organic EL element 11z is varied by element deterioration and the like, the stabilized voltage Vout applied to the voltage switching circuit 15 (15a to 15n) and the current detecting resistor Rref is adjusted to stabilize the currents flowing into the organic EL elements 11a to 11n and hence to keep the luminance constant.

If the voltage-current characteristics and variations of them by aging of all the organic EL elements 11z, 11a to 11n are substantially equal, even when the internal resistance value sRz, Ra to Rn of the segments vary as the result of characteristic variation, the stabilized voltage Vout is controlled so that the drive currents Iref, Ia to In are constant. Therefore, the luminance variation is smaller than by a simple constant voltage drive method. Further, the luminance difference among the segments is lessened.

The proposal described above suffers from the following problems, however. The proposal needs the reference organic EL element 11z for current measurement, in addition to the organic EL elements 11a to 11n. Therefore, cost to manufacture is increased, and the area for forming it must be additionally provided, leading to reduce the space efficiency.

In the proposal, the current detection is carried out on the assumption that the reference organic EL element 11z is free from failure. If the reference organic EL element 11z fails or is impaired by some causes, exact current measurement is lost, and the accuracy of the voltage control is considerably reduced.

A density of current flowing through the reference organic EL element 11z for current measurement sometimes is different from the density of current flowing through the organic EL elements 11a to 11n for actually emitting light since in some current detecting means 31 for measuring the current, as the result of a voltage drop within the current detecting means 31, the voltage applied to the reference organic EL element 11z is lower than the voltage applied to the organic EL elements 11a to 11n for actually emitting light. In this case, if the current of the reference organic EL element 11z is measured by the current detecting means 31, there is the possibility that the currents of the organic EL elements 11a to 11n for actual light emission cannot be measured accurately.

SUMMARY OF THE INVENTION

The present invention has been made to solve the above problem, and has an object to provide a drive device for driving EL elements which keeps the luminance of the EL element constant not using a complicated constant current source.

A drive device for EL elements defined in item 1 comprises: temperature detecting means for detecting ambient temperature of each EL element and outputting an output value corresponding to the detected temperature; and control means which receives the output value of the temperature detecting means and adjusts the luminance of the EL element to be constant in value in connection with the ambient temperature of the EL element.

A drive device for EL elements defined in item 2 depends from the item 1. In the drive device of the item 2, the control means has a function to determine a drive voltage for causing the EL element to emit light at a predetermined luminance value at the output value of the temperature detecting means, and adjusts the luminance of the EL element by driving the EL element at the drive voltage.

A drive device for EL elements defined in item 3 depends from the item 2. In the drive device of the item 3, the control means contains data indicative of a drive voltage which is set corresponding to the output value of the temperature detecting means and causes the EL element to emit light at a predetermined luminance value, and determines the drive voltage on the basis of the data.

A drive device for EL elements defined in item 4 depends from the item 1. In the drive device of the item 4, the on/off operation of the EL elements is controlled at a predetermined duty, and the control means has a function to determine a duty ratio of the EL element for causing the EL element to emit light at a predetermined luminance value at the output value of the temperature detecting means, and adjusts the luminance of the EL element by driving the EL element by controlling the on/off operation of the EL element at the duty ratio.

A drive device for EL elements defined in item 5 depends from the item 4. In the drive device of the item 5, the control means contains data indicative of a duty ratio which is set corresponding to the output value of the temperature detecting means and causes the EL element to emit light at a predetermined luminance value, and determines the duty ratio on the basis of the data.

A drive device for EL elements defined in item 6 comprises: light emission detecting means for detecting a light emitting state of each EL element and outputting an output value corresponding to the detected light emitting state; and control means which receives the output value of the light emitting state detecting means and adjusts the luminance of the EL element to be constant in value on the basis of the output value received.

A drive device for EL elements defined in item 7 depends from the item 6. In the drive device of the item 7, the control means computes a luminance of the EL element by using the output value of the light emission detecting means, and has a function to vary a drive voltage of the EL element so that the luminance becomes equal to a predetermined reference luminance, and adjusts the luminance of the EL element by driving the EL element at the varied drive voltage.

A drive device for EL elements defined in item 8 depends from the item 6. In the drive device of the item 8, the on/off operation of the EL element is controlled at a predetermined duty ratio, and the control means computes a luminance of the EL element by using the output value of the light emission detecting means, and has a function to vary a duty ratio of the EL element so that the luminance becomes equal to a predetermined reference luminance, and adjusts the luminance of the EL element by controlling the on/off operation of the EL element at the varied duty ratio.

A drive device for EL elements defined in item 9 depends from the item 8. In the drive device of the item 9, the control means computes a difference between a luminance value computed from the output value of the light emission detecting means and the reference luminance value, and varies the duty ratio of the EL element at the time of detecting the light emission in accordance with the computed luminance difference, whereby a duty ratio for providing the reference luminance value is obtained.

Accordingly, an object of the present invention is to provide an EL display device of the matrix driven type which is capable of making uniform the luminance values of the display segments connected together to a drive voltage source.

To achieve the above object, there is provided an EL display device comprising: EL elements having such a matrix electrode structure that first and second electrodes of a plurality of display segments are arranged into a plurality of groups of segments, the electrodes being connected together for each group by a column connection wire and a row connection wire; a plurality of drive voltage sources being connected to the column connection wires and selectively outputting a plurality of drive voltage values set for the display segments connected to the column connection wires; a plurality of first switches inserted between the drive voltage sources and the column connection wires; a plurality of second switches inserted, between the row connection wires and predetermined potential sources; and control means operating such that the control means selectively turns on the first switches while turning on the second switches in a time divisional manner, thereby driving the EL elements to emit light, and when the EL elements are driven for light emission, the control means causes the drive voltage sources to vary their output voltages to the drive voltage values set for the display segments selected by the first and second switches.

In the EL display device described above, each column connection wire is such that lead-out electrodes formed integral with the first electrodes grouped are connected together by an electric wire, and the plurality of drive voltage values of the drive voltage sources are each defined by the current value set for each display segment and a resistance value of each lead-out electrode corresponding to the display segments.

Accordingly, an object of the present invention is to provide a display element drive device which is capable of accurately measuring the currents flowing through the organic EL elements for actual light emission, and appropriately controlling the currents flowing through those EL elements in accordance with variations of the luminance of those EL elements.

To achieve the above object, there is provided a display element drive device for driving one or a plurality of EL elements, defined in item 1, comprising: a single stabilized voltage supply circuit for supplying a stabilized voltage to the EL elements; a switching circuit for selecting the supply or non-supply of the stabilized voltage from the stabilized voltage supply circuit to the EL elements; a current measuring circuit for measuring drive current fed to the EL elements through the switching circuit from the stabilized voltage supply circuit; and control means operating such that the control means drives and turns on a predetermined EL element of the EL elements at a predetermined timing through the switching circuit, when a drive display of the EL element is presented by operating the switching circuit, the control means applies a voltage control signal to the stabilized voltage supply circuit on the basis of the result of measuring by the current measuring circuit so that the luminance of the EL elements are uniform in values, whereby the stabilized voltage of the stabilized voltage supply circuit is adjusted.

In a display element drive device defined in item 2, a current comparing circuit for judging as to whether or not the drive current measured by the current measuring circuit is within a predetermined tolerance range is located between the current measuring circuit and the control means, and the current comparing circuit inputs a binary signal, which represents the result of judging as to whether or not the drive current measured by the current measuring circuit, to the control means.

In a display element drive device defined in item 3, the control means turns on a predetermined EL element or predetermined EL elements of the EL elements for a predetermined short time when the current measuring circuit is operated for measurement.

In a display element drive device defined in item 4, the control means adjusts, at the time of power on, the stabilized voltage of the stabilized voltage supply circuit on the basis of the result of detecting temperature by a predetermined temperature detecting means.

<u>BRIEF DESRIPTION OF THE DRAWINGS</u>

Fig. 1 is a circuit diagram showing a drive device for driving EL elements which is an embodiment 1 of the present invention.

Fig. 2 is a table showing useful in explaining an operation of the drive device of the embodiment 1.

Fig. 3 is a circuit diagram showing a drive device for driving EL elements which is an embodiment 2 of the present invention.

Fig. 4 is a table showing useful in explaining an operation of the drive device of the embodiment 2.

Fig. 5 is a circuit diagram showing a drive device for driving EL elements which is an embodiment 3 of the present invention.

Fig. 6 diagrammatically shows an example of the allocation of a light receiving element on a circuit board.

Fig. 7 is a circuit diagram showing a drive device for driving EL elements which is an embodiment 4 of the present invention.

Fig. 8 is a graph showing a luminance vs. application voltage characteristic of the EL element.

Fig. 9 is a graph showing a relationship between temperature of the EL element and application voltage.

Fig. 10 is a circuit diagram an EL display device which is an embodiment 5 of the present invention.

Fig. 11 is a diagram for explaining a segment electrode structure of an organic EL element in the organic EL display device of Fig. 10.

Fig. 12 is a table showing relationships between display segments and the values of the drive voltage applied to the display segments.

Fig. 13 is a diagram for explaining how to set a resistance value of the lead-out electrode of each display segment in the EL display device of Fig. 10.

Fig. 14 is a block diagram showing a principle of a display element drive device constructed according to the present invention.

Fig. 15 is a block diagram showing a concept of a display element drive device which is an embodiment 6 of the present invention.

Fig. 16 is a diagram showing an organic EL element panel, a column driver and row driver.

Fig. 17 is a circuit diagram showing a current measuring circuit.

Fig. 18 is a timing chart showing an operation of the display element drive device.

Fig. 19 is a block diagram showing a concept of a display element drive device which is an embodiment 7 of the present invention.

Fig. 20 is a circuit diagram showing a concept of a display element drive device which is the embodiment 7 of the present invention.

Fig. 21 is a diagram useful in explaining how to judge the control of a voltage control signal, which is determined by comparing a current detect signal output from the current measuring circuit with a predetermined tolerance range.

Fig. 22A and 22B are waveform diagram showing a difference of a D/A output voltage applied to a variable constant-voltage source circuit from an output voltage output from the variable constant-voltage source circuit.

Fig. 23 is a flow chart showing another method of judging the control of a voltage control signal, which is determined by comparing a current detect signal output from the current measuring circuit with a predetermined tolerance range.

Fig. 24 is a graph showing a relationship between current density and luminance in an organic EL element.

Fig. 25 is a circuit diagram of an example of an EL element of the dot matrix type.

Fig. 26 is a block diagram showing a conventional EL display device of the fixed segment type.

Fig. 27 is a graph showing a relationship between current density and application voltage.

Fig. 28 is a block diagram showing a proposed display element drive device.

Fig. 29 is a circuit diagram showing the display element drive device of Fig. 28.

## DETAILED DESCRIPTION OF THE PREFERRED EMBODIMENTS

〈Embodiment 1〉

Fig. 1 is a circuit diagram showing a drive device for driving EL elements which is an embodiment 1 of the present invention.

In Fig. 1, a thermistor TM (temperature detecting means) is used for detecting ambient temperature of the EL element. The thermistor TM is greatly varied in resistance with variation of temperature. One end of the thermistor TM is connected to a pull-up resistor R3 that is connected to a power source Vcc of 5V, while the other end is connected to ground. A voltage derived from a node between the resistor R3 and the thermistor TM is applied to an A/D input port of a microcomputer MC (control means). The temperature detecting means is not limited to the thermistor TM, as matter of course.

The microcomputer MC computes a temperature by using the data representing relationships between the outputs of a thermistor TM and temperatures, which the data is prepared in advance. The microcomputer MC determines an application voltage (i.e., drive voltage) by use of a data table stored therein, which tabulates relationships between temperature values and voltage values applied as the dive voltage of the EL element.

An example of the data table tabulating temperature vs. application voltage relationships is shown in Fig. 2. The data table shown in Fig. 2 shows application voltage values required for keeping the luminance at 300 cd/cm$^2$ at temperature values. To obtain the luminance of 300 cd/cm$^2$ at temperature 30°C, 6.5V is required for the application voltage.

The drive voltage of 6.5V may directly be output from the microcomputer MC. In an alternative, an analog signal corresponding to each drive voltage is output from a D/A output port, and the output one is amplified.

The output signal of the microcomputer MC is input to the non-inverting input terminal of an operation amplifier OA as shown in Fig. 1, and amplified to a predetermined voltage and the amplified one is output therefrom. The inverting input terminal of the operation amplifier OA is earthed through a resistor R1. The output signal of the operation amplifier OA is applied to a column selector SEL1 of an EL display panel DP, and also applied to the noninverting input terminal via a resistor R2, whereby a feedback circuit is formed.

Fig. 1 shows the EL display panel DP including electroluminescent elements EL1 to EL9 arrayed in a matrix of 3 (row) x 3 (column).

In the EL display panel DP, the anodes of the EL elements EL1, EL4 and EL7 are connected to an anode wire AL1, and the cathodes are respectively connected to cathode wires CL1, CL2 and CL3.

The anodes of the EL elements EL2, EL5 and EL8 are connected to an anode wire AL2, and the cathodes are respectively connected to cathode wires CL1, CL2 and CL3.

The anodes of the EL elements EL3, EL6 and EL9 are connected to an anode wire AL3, and the cathodes are respectively connected to cathode wires CL1, CL2 and CL3.

The column selector SEL1 includes transistors Q11, S21 and Q31, and Q1, Q2 and Q3. Those transistors Q11, Q21 and Q31 are connected such that the emitter electrodes thereof are connected to the output of the operation amplifier OA, and the collector electrodes are respectively connected to the anode wires AL1, AL2 and AL3. The base electrodes of the transistors Q11, Q21 and Q31 are respectively connected to the collector electrodes of the transistors Q1, Q2 and Q3 through resistors R12, R22, and R32. The transistors Q1, Q2 and Q3 are earthed at their emitter electrodes.

The base electrodes of the transistors Q1, Q2 and Q3 are respectively connected through resistors R11, R21 and R31 to the signal output terminals of the microcomputer MC.

A row selector SEL2 includes transistors Q41, Q51 and Q61. The collectors of those transistors are respectively connected to the anode wires CL1, CL2 and CL3, and the emitter electrodes thereof are earthed. The base electrodes of the transistors Q41, Q51 and Q61 are respectively connected to the signal output terminals of the microcomputer MC, through resistors R41, R51 and RR61.

An operation of the EL display panel DP will be described. It is assumed that the microcomputer MC outputs a control signal causing the transistor Q41 to turn on. In this state, when the microcomputer MC applies a control signal to the transistor Q1 a control signal causing the transistor Q11 to turn on, a drive voltage is applied to the EL element EL1, and in turn the EL element emits light. Subsequently, the transistor Q21 is turned on, and drive voltage is applied to the EL element EL2, thereby causing the EL element to emit light. In this way, predetermined column data and row data are applied to the transistors Q1, Q2 and Q3 of the column selector SEL1 and the transistors Q41, Q51 and Q61 of the row selector SEL2, and as a result, desired EL elements may be turned on and off.

The microcomputer is designed such that a drive voltage, which is set on the basis of ambient temperature to keep the luminance of the EL element at a fixed value, is output through the operation amplifier OA. Therefore, even if ambient temperature varies, the luminance of the EL element can be kept constant.

〈Modification〉

The drive device is arranged such that an output signal of the microcomputer MC is amplified by the operation amplifier OA, and the amplified one is applied as a drive voltage to the EL element. Where the microcomputer MC is capable of supplying desired drive voltages, there is no need of using the operation amplifier OA, as a matter of course.

The drive device described above is arranged such that an output signal of the thermistor TM is input to the microcomputer MC, and the microcomputer MC produces drive voltages defined by the table tabulating the relationships between temperatures and application voltages (i.e., drive voltages), which the table is stored in the microcomputer MC. In an alternative, the microcomputer MC may be replaced with a hardware arrangement designed such that produces voltages corresponding to output signals of the thermistor TM and outputs the voltages to the operation amplifier OA.

〈Embodiment 2〉

Fig. 2 is a circuit diagram showing a drive device for driving EL elements which is an embodiment 2 of the present invention.

In Fig. 3, a thermistor TM is used for detecting ambient temperature of the EL element. The thermistor TM is greatly varied in resistance with variation of temperature. One end of the thermistor TM is connected to a pull-up resistor R3 that is connected to a power source Vcc of 5V, while the other end is connected to ground. A voltage derived from a node between the resistor R3 and the thermistor TM is applied to an A/D input port of a microcomputer MC.

The microcomputer MC computes a temperature by using the data representing relationships between the outputs of a thermistor TM and temperatures, which the data is prepared in advance. The microcomputer MC determines a duty ratio on lighting while referring to a data table, stored therein, which contains relationships between temperatures and duty ratios on lighting, and controls on/off cycles of the EL elements.

Fig. 4 shows a table tabulating relationships between temperatures and duty ratios. In the data table shown in Fig. 4, a minimum operation temperature of the EL element is set at 20°C, and the drive voltage (referred to as a maximum set voltage) is set so that the element luminance is 250 cd/cm$^2$ at that temperature. The data table shows that when ambient temperature of the EL element is varied, how the element luminance varies, and that the data table shows duty ratios required for keeping the luminance of the EL element at 250 cd/cm$^2$ at each temperature.

When the ambient temperature is 20°C, the maximum set voltage whose duty ratio is 100% (corresponding to a continuous light emitting state) is applied to the EL element, the luminance of the EL element is 1250 cd/cm$^2$. When the duty ratio is set at 20%, the luminance is also reduced to 1/5, 250 cd/cm$^{2,}$ as large as in the case of the 100% duty ratio.

In Fig. 3, the arrangements of the EL display panel DP, column selector SEL1 and row selector SEL2 are substantially the same as of the Fig. 2 circuitry except that constant voltage VIG is applied as drive voltage to the emitter electrodes of the transistors Q11, Q21 and Q31 in the column selector SEL1.

The microcomputer MC computes a temperature by using an output signal of the thermistor TM, obtains a duty ratio while referring to the values in the data table showing the relationships between temperatures and the duty ratios on lighting, and controls the on/off operations of the transistors Q1, Q2 and Q3, and Q41, Q51 and Q61 in the column selector SEL1 and the row selector SEL2. Therefore, even if the ambient temperature varies, the luminance of the EL element is kept constant.

If necessary, only the transistors Q1, Q2 and Q3 or only the transistors Q41, Q51 and Q61 may be controlled in their on/off operations.

《Embodiment 3》

Fig. 5 is a circuit diagram showing a drive device for driving EL elements which is an embodiment 3 of the present invention.

In Fig. 5, a light receiving element PE is used for measuring a light emitting state of the EL element. The light receiving element PE may be a photo diode, a photo transistor or the like. In the drive device shown in Fig. 5, it is a photo diode. The cathode of the photo diode is connected to a power source Vcc of 5V, while the anode is connected to ground through a pull-up resistor R4. An output signal output from a node between a resistor R4 and the light receiving element PE is input to an A/D input port of a microcomputer MC. If the output signal of the light receiving element PE is small in amplitude, it may be amplified by an amplifier.

The microcomputer MC computes a luminance of the EL element by using an output voltage of the light receiving element PE. When the computed luminance value is higher than a predetermined luminance value, the microcomputer reduces the drive voltage applied to the EL element. When it is lower than the predetermined luminance, the microcomputer increases the drive voltage applied to the EL element.

The drive device under discussion may be arranged such that the microcomputer MC directly outputs a predetermined drive voltage or that an analog signal corresponding to each drive voltage is output from the D/A output port and then amplified.

Specifically, an output signal of the microcomputer MC, as shown in Fig. 5, is input to the noninverting input terminal of the operation amplifier OA, and is amplified up to a predetermined voltage and the amplified one is output. The noninverting input terminal of the operation amplifier OA is grounded through a resistor R1, and the output signal of the operation amplifier OA is applied to the column selector SEL1 of the EL display panel DP, and also fed back to the inverting input terminal of the operation amplifier per se, whereby a negative feedback circuit is formed.

The output signal of the operation amplifier OA is applied to the column selector SEL1 of the EL display panel DP. Where the current is insufficient, it may be made sufficient by connecting an emitter-follower circuit using a transistor to the output of the operation amplifier OA.

In the Fig. 5 circuitry, the column selector SEL1 and the row selector SEL2 are the same in arrangement as those in the Fig. 1 circuitry. Hence, no further description of them will be given.

An example of the allocation of the light receiving element PE to implement the invention on a circuit board is, shown in Fig. 6. In the figure, an EL display panel DP is allocated on a circuit board CB as shown. A monitor portion MP is located at a position apart from a main emitting portion of the EL display panel DP. The monitor portion MP is formed with an EL element for monitoring purpose) (which is of the same type as of the EL element of the main light emitting portion). The light receiving element PE is disposed at a position where it is confronted with the monitor portion MP. An output signal of the light receiving element PE is connected to a microcomputer (not shown) via a given wire laid on the circuit board CB.

An example of the operation of the drive device for EL elements, which is the present embodiment, will be described. In the operation, the ambient temperature is 30°C and the reference luminance value is 300 cd/cm$^2$.

As seen from the temperature characteristic of the EL element shown in Fig. 9, when the ambient temperature is 30°C, the luminance is 300 cd/cm$^2$ at 6.5V of the application voltage. When the ambient temperature decreases to 0°c, the luminance decreases up to 70 d/cm$^2$. After knowing that the ambient temperature drops below 30°C, and that the luminance has decreased to below 300 cd/cm$^2$, from the light receiving element PE, the microcomputer MC increases the application voltage (i.e., drive voltage) that is applied to the EL element to return the decreased luminance value to the original one. When the luminance value of the EL element is returned to 300 cd/cm$^2$, it maintains its application voltage. With decrease of the temperature, the microcomputer MC repeats the operation to increase the application voltage. When the ambient temperature drops up to 0°C, the application voltage increases to a voltage value near 8V, whereby the luminance is kept at 300 cd/cm$^2$.

Thus, in the drive device, a light emitting state of the EL element is constantly monitored, and the result is input to the microcomputer MC. Then, the microcomputer MC converts the result into a luminance value, and compares the converted one with a reference luminance value. And it adjusts the drive voltage applied to the EL element so that the converted luminance value is equal to the reference luminance value. Therefore, even when the temperature of an environment where the drive device is used varies and the luminance value deviates from the reference luminance value, the drive device is capable of returning the deviated one to the reference luminance value.

Even when the luminance varies owing to the aging, the luminance adjusting function of the drive device effectively operates, as a matter of course.

Additionally, performance degradation of the EL element, which arises from the application of the voltage exceeding its rated voltage to the EL element, may be prevented by putting an upper limit to the drive voltage when the drive voltage is set., as a matter of course.

〈Embodiment 4〉

Fig. 7 is a circuit diagram showing a drive device for driving EL elements which is an embodiment 4 of the present invention.

In Fig. 7, a light receiving element PE is used for measuring a light emitting state of the EL element. The light receiving element PE may be a photo diode, a photo transistor or the like. In the drive device shown in Fig. 7, it is a photo diode. The cathode of the photo diode is connected to a power source Vcc of 5V, while the anode is connected to ground through a pull-up resistor R4. An output signal output from a node between a resistor R4 and the light receiving element PE is input to an A/D input port of a microcomputer MC. If the output signal of the light receiving element PE is small in amplitude, it may be amplified by an amplifier.

The microcomputer MC computes a luminance of the EL element by using an output voltage of the light receiving element PE. When the computed luminance value is higher than a predetermined luminance value, the microcomputer decreases a duty ratio on lighting of the EL element, and when it is lower than the predetermined luminance value, the microcomputer MC increases the duty ratio.

In Fig. 7, the arrangements of the EL display panel DP, column selector SEL1 and row selector SEL2 are substantially the same as of the Fig. 5 circuitry except that constant voltage VIG is applied as drive voltage to the emitter electrodes of the transistors Q11, Q21 and Q31 in the column selector SEL1.

An example of the operation of the drive device for EL elements, which is the present embodiment, will be described. In the operation, the ambient temperature is 25°C and a luminance value produced when a given drive voltage whose duty ratio is 20% is applied to the EL element is used as a reference luminance value. When the ambient temperature drops from 25°C to 20°C and the luminance value decreases by 5%, the drive device increases the duty ratio to compensate for the luminance reduction, whereby the reduced luminance value is returned to the original one.

The microcomputer MC knows that the ambient temperature drops to 20°C and the luminance value drops to below the reference luminance value by the light receiving element PE, and then it computes a difference between the reference luminance value and the luminance value when the light emission is detected, and computes a luminance decrease rate. Subsequently, the microcomputer MC increases the duty ratio so as to compensate for the luminance decrease. In this instance, as recalled, the luminance decrease rate is 5%, and the duty ratio for producing the reference luminance is 20%. Therefore, the luminance value may be returned to the reference luminance value by setting the duty ratio at 21%.

The microcomputer MC performs the on/off control of the transistors Q1, Q2 and Q3 in the column selector SEL1, and the transistors Q41, Q51 and Q61 in the row selector SEL2, on the basis of the computed duty ratio, or 21%. Therefore, even if the ambient temperature of the EL element varies, the luminance value may be kept constant. If necessary, the on/off control may be applied to only the transistors Q1, Q2 and Q3 or only the transistors Q41, Q51 and Q61.

Thus, in the drive device, a light emitting state of the EL element is constantly monitored, and the result is input to the microcomputer MC. Then, the microcomputer MC converts the result into a luminance value, and compares the converted one with a reference luminance value. And it adjusts the duty ratio of the EL element. Therefore, even when the temperature of an environment where the drive device is used varies and the luminance value deviates from the reference luminance value, the drive device is capable of returning the deviated one to the reference luminance value.

Even when the luminance varies owing to the aging, the luminance adjusting function of the drive device effectively operates, as a matter of course.

〈Modification〉

In the embodiment 4 described above, the luminance value is adjusted by adjusting the light emitting duty ratio. In an alternative, the luminance adjusting process of the embodiment 4 may be combined with that of the embodiment 3 which adjusts the drive voltage applied to the EL element for the luminance adjustment. The alternative will expand the dynamic range as the luminance adjusting range.

As seen from the foregoing description, in the drive device for EL elements defined in item 1, control means adjusts the luminance of the EL element to be constant in value in connection with the ambient temperature of the EL element. Therefore, the luminance of an EL element whose luminance depends on temperature is kept constant independently of ambient temperature.

In the drive device of the item 2, the control means determines a drive voltage for causing the EL element to emit light at a predetermined luminance value at the output value of the temperature detecting means, i.e., a temperature around the EL element, and applies the determined drive voltage to the EL element. Therefore, the luminance of the EL element is kept constant independently of ambient temperature.

In the drive device of the item 3, a drive voltage of the EL element is determined on the basis of the output value of the temperature detecting means, i.e., the data of the drive voltage corresponding to the ambient temperature of the EL element. Therefore, time required for determining the drive voltage is short.

In the drive device of the item 4, in controlling the turn on/off operation of the EL elements with a predetermined duty, the control means determines a duty ratio of the EL element for causing the EL element to emit light at a predetermined luminance value at the output value of the temperature detecting means, i.e., a temperature around the EL element, and controls the on/off operation of the EL element at the duty ratio. Therefore, the luminance of the EL element is kept constant independently of ambient temperature.

In the drive device of the item 5, a duty ratio of the EL element is determined on the basis of the data indicative of a duty ratio corresponding to the output value of the temperature detecting means. Therefore, time required for determining the drive voltage is short.

In the drive device of the item 6, light emission detecting means detects a light emitting state of each EL element, and control means adjusts the luminance of the EL element to be constant in value on the basis of the light emitting state detected. Therefore, the luminance of an EL element whose luminance depends on temperature is kept constant independently of ambient temperature even if the ambient temperature varies.

In the drive device of the item 7, the control means computes a luminance of the EL element by using the output value of the light emission detecting means, and varies a drive voltage of the EL element so that the luminance becomes equal to a predetermined reference luminance. Therefore, even when ambient temperature of the EL element varies and its luminance varies, the luminance of the EL element may be kept constant.

In the drive device of the item 8, in controlling the on/off operation of the EL element at a predetermined duty ratio, the control means computes a luminance of the EL element by using the output value of the light emission detecting means, and varies a duty ratio of the EL element so that the luminance becomes equal to a predetermined reference luminance, and controls the on/off operation of the EL element at the varied duty ratio. Therefore, the luminance of an EL element is kept constant independently of ambient temperature.

In the drive device of the item 9, the control means computes a difference between a luminance value computed from the output value of the light emission detecting means and the reference luminance value, and varies the duty ratio of the EL element at the time of detecting the light emission in accordance with the computed luminance difference, whereby a duty ratio for providing the reference luminance value is obtained. Therefore, the reference luminance value can exactly be maintained.

〈Embodiment 5〉

An embodiment 5 of the present invention will be described with reference to Figs. 10 through 12.

Fig. 10 is a circuit diagram showing an organic EL display device which forms the embodiment 5 of the present invention. Fig. 11 is a diagram for explaining a segment electrode structure of the organic EL elements in the EL display device. Fig. 12 is a table showing voltage values of drive voltage applied to display segments in the organic EL display device. Fig. 13 is a diagram for explaining how to set a resistance value of an electrode led out of each display segment.

An organic EL display device 4 the present embodiment, as shown in Fig. 10, is generally made up of an EL element 5, which includes a plurality of display segments 14 and is formed to have a matrix electrode structure, a drive voltage supply portion 6, a column selector 7, a row selector 8, and a control portion 9.

The matrix structure of the EL element 5 is such that at each of the cross points of column wires 12 and row wires 13, a display segment 14 is connected at the cathode to the row wire 13 and at the anode to the column wire 12.

In the embodiment, the EL element 5, which is illustrated in the form of an equivalent circuit in Fig. 10, has a specific structure as shown in Fig. 11. In the structure, a plurality of anodes 20 formed of ITO (indium-tin-oxide) films configured as a display pattern, and lead-out electrodes 15, which are continuous to and led out from the anodes 20, are formed on a transparent substrate 19, while being patterned as shown. Insulating layers (not shown) are layered on the lead-out electrodes 15. An organic layer (not shown) and cathode electrodes 22 composed of aluminum or the like are successively layered covering the anodes 20. A portion where each anode 20, the organic layer and each cathode electrode 22 are laminated forms a display segment 14.

The cathode electrodes 22 of the display segments 14 are arranged into a plurality of groups of cathode electrodes (each group consists of three cathode electrodes). Those cathode electrodes are integrally formed for each group to form a plurality of common electrodes 130. The anodes 20 are likewise arranged into a plurality of groups of anodes. The lead-out electrodes 15 of the anodes 20 of each group are connected together by a column wire 12 (electrically conductive wires, e.g., printed wires formed of copper foil). In this case, each common electrode 130 has also a function of the row wire 13 (row connection wire) in Fig. 10. The lead-out electrodes 15 and the column wires 12 form column connection wires.

In this embodiment, the organic layer consists of three layers. Those layers are a hole transport layer, a light-emitting layer, and an electron transport layer, as counted from the anode 20. The hole transport layer is composed of a compound of the amine family. The light-emitting layer is composed of an alumi-quinolinol complex. The electron transport layer is composed of zinc (II) complex. Each of the display segments 14 using the organic layer thus structured has the following operation characteristic. When the drive voltage is applied to the display segment so that the current flows from the anode from the cathode, the display segment emits light. When the drive voltage, reversed in polarity, is applied, the display segment does not emit light. Accordingly, each display segment is equivalent function to a diode (see Figs. 10 and 11).

To clear the relationships among the components of the EL element 5, in Figs. 10 and 11, alphabetic letters are put to the reference numerals 12, 13, 14 and 15, which represent column wires, row wires, display segments and lead-out electrodes. Thus, in the EL element 5, generally, resistance values of the column wires 12A to 12C, and the row wires 13A to 13C are much smaller than those of the ITO films of the lead-out electrodes 15A to 15I, and negligible actually.

The drive voltage supply portion 6, as shown in Fig. 10, includes a plurality of drive voltage sources 28A, 28B and 28C, which are respectively connected to the column wires 12A, 12B and 12C. The drive voltage sources 28A, 28B and 28C include respectively reference voltage sources 29A, 29B and 29C for generating reference voltages V1, V2 and V3 (generally designated by V), and voltage converting portions 30A, 30B and 30C which convert the reference voltages in accordance with a command issued from the control portion 9 and output the converted ones to the column wires 12A, 12B and 12C.

A plurality of drive voltage values V (see Fig. 12) are set in the voltage converting portions 30A, 30B and 30C while corresponding to the display segments 14 connected to those voltage converting portions (for example, the voltage converting portion 30A is connected to the display segments 14A, 14D and 14G). Those voltage converting portions 30A, 30B and 30C receives a command from the control portion 9, and convert the reference voltage V1, V2 and V3 output from the reference voltage sources 29A, 29B and 29C into the voltage selected by the received command, and output the converted ones.

To produce a predetermined luminance value, the drive voltage values V are each defined by $V = I \times R$ where I is a current value set for the corresponding display segment 14, and V is a resistance value R of the lead-out electrode 15 led out of the display segment 14. The resistance value R of the lead-out electrode 15 is defined by $R = (L/W) \times 10\Omega$ where, as shown in Fig. 13, L is a length of he lead-out electrode 15, W is a width of it, and a sheet resistance value of the ITO film is 10Q/□ .

In the embodiment, the display segments 14 connected together by the same row wire 13, as shown in Fig. 12, are arranged so as to have an equal voltage ratio k ( $K = v/V$ ) of the reference voltage value v to the drive voltage value V. Specifically, the voltage values v of the display segments 14A, 14B and 14C connected together to the row wire 13A are selected to be the products of multiplying the reference voltage values V1, V2 and V3 by k1. The voltage values v of the display segments 14 connected together to the row wires 13B and 13C are selected to be the products of multiplying the reference voltage values V1, V2 and V3 by k2 and k3.

The command issued from the control portion 9 to the drive voltage supply portion 6 is a command for designating any of the voltage ratios k1, k2 and k3. Upon receipt of the command, the drive voltage supply portion 6 converts the reference voltage values V1, V2 and V3 into the products multiplying those voltage values by an equal voltage ratio k, and outputs the converted ones. When the drive voltage supply portion 6 receives a command representing a voltage ratio k1 from the control portion 9, the drive voltage supply portion outputs the drive voltage values v of k1 x V1, k2 x V2 and k3 x V3 to the voltage converting portions 30A, 30B and 30C.

The column selector 7 contains a plurality of column switches 33A, 33B and 33C (first switches), which are inserted between the column wires 12A, 12B and 12C and the voltage converting portions 30A, 30B and 30C. those column switches 33A, 33B and 33C are selectively turned on and off by a command from the control portion 9.

The row selector 8 contains row switches (second switches) 34A, 34B and 34C, which are inserted between the row wires 13A, 13B and 13C and as ground points 35. When receiving a command from the control portion 9, those row switches 34A, 34B and 34C are selectively turned on and off.

The control portion 9, containing mainly a CPU, sends to the row selector 8 a command which turns on the row switches 34A, 34B and 34C in a time divisional manner by a driving method for driving the organic EL display device, prestored in the CPU, such as a matrix driving method (dynamic driving method). At the same time, the control portion sends to the drive voltage supply portion 6 a command which designates a voltage ratio for the display segments 14 designated by the row switches 34A, 34B and 34C. That is, the drive voltage sources 28A, 28B and 28C are controlled by the control portion 9 such that their output voltages are converted into the drive voltage values v corresponding to the display segments 14 specified by the row switches 34A, 34B and 34C. At the time, a command to selectively turn on the column switches 33A, 33B and 33C is sent to the column selector 7.

An operation of the organic EL display device 4 thus arranged will be described.

To start, the row selector 8 receives a command issued from the control portion 9 and turns on only the row switch 34A (the row switches 34B and 34C are in an off state).

At the same time, the control portion 9 sends to the drive voltage supply portion 6 a command to the effect of performing a voltage conversion at the voltage ratio k1 assigned to the display segments 14A, 14B and 14C connected together. In response to the command, the drive voltage supply portion 6 causes the voltage converting portions 30A, 30B and 30C to multiply the reference voltages V1, V2 and V3 output from the reference voltage sources 29A, 29B and 29C by the voltage ratio k1, and outputs the resultant drive voltage values of k1 x V1, k1 x V2, and k1 x V3.

In this state, the control portion 9 sends to the column selector 7 a command to the effect of selectively turning on the column switches 33A, 33B and 33C. In this case, it is assumed that the command issued is a command to turn on the column switches 33A and 33C. Accordingly, the column switches 33A and 33C are turned on. As a result, the display segments 14A and 14C receive the drive voltages k1 x V1 and k1 x V3 for those display segments. The drive currents defined by the applied voltages flow through the display segments 14A and 14C, the row switch 34A to ground, whereby those display segments are turned on.

Thereafter, the control portion 9 successively sends to the row selector 8 commands to the effect of turning on the row switches 34B and 34C in time division manner, and controls the drive voltage supply portion 6 and the column selector 7 in a manner as described above. That is, when the row switch 34B is turned on, it multiplies the voltage ratio by k2. When the row switch 34C is turned on, it multiplies the voltage ratio by k3, whereby the display segments 14 are selectively driven to emit light. The display segments 14 are driven for light emission while the above-mentioned operations are repeated.

In the organic EL display device 4 thus arranged, the drive voltage v as the output voltage of the drive voltage supply portion 6 is varied and output for the display segments 14 selected by the row wires 13 turned on in time divisional manner. Accordingly, in the matrix drive (dynamic drive) system, the organic EL display device can supply to the display segments 14 connected together, to the drive voltage sources 28A, 28B and 28C, drive voltages set for the display segments 14 through the column wires 12A, 12B and 12C.

The drive voltages set for the display segments 14 are defined by the current value I set for the display segments 14 and the resistance value R of the lead-out electrodes 15 formed to the anodes 20. Therefore, the luminance values of the display segments 14 may be made uniform. And there is no chance that the luminance values are not uniform.

In the embodiment, the display segments 14, which are connected to the row switches 34A, 34B and 34C such that each group of the display segments 14 are connected together to the related row switch, are arranged such that each of those display segments have an equal voltage ratio k. The voltage converting portions 30A, 30B and 30C multiply the reference voltage values V1, V2 and V3 by a voltage ratio k specified by the control portion 9, and outputs the resultant. In a case where it is impossible to arrange the display segments 14 which are connected to the row switches 34A, 34B and 34C such that each group of the display segments 14 are connected together to the related row switch such that each of those display segments have an equal voltage ratio k, the voltage ratio k may be set for each of the voltage converting portions 30A, 30B and 30C by a command issued from the control portion 9.

While the present invention is applied to the organic EL display device, it will easily be understood that the present invention may be applied to other EL display devices than the organic EL display device.

As seen from the foregoing description, in the EL display device of item 1, a plurality of drive voltage values may be selectively output to the drive voltage sources, which are connected to the column connection wires by way of first switches, in accordance with the display segments each group of which are connected to the drive voltage source. When the display segments are selectively driven to emit light in a manner that the first switches are turned on while the second switches connected to the column connection wires are turned on in a time divisional manner, the output voltages of the drive voltage sources are converted into drive voltage, values set for the display segments selected by the first and second switches. Therefore, in the matrix drive (dynamic drive) system, the drive voltage set for the display segment may be supplied to the display segments connected together to the same drive voltage source.

In the EL display device of item 2, each column connection wire is such that lead-out electrodes formed integral with the first electrodes grouped are connected together by an electric wire, and the plurality of drive voltage values of the drive voltage sources are each defined by the current value set for each display segment and a resistance value of each lead-out electrode corresponding to the display segments. The luminance values of the display segments may be uniform, whereby the EL display device is free from uneven luminance among the display segments.

〈Principle〉

Fig. 14 is a block diagram showing a principle of a display element drive device constructed according to the present invention. In Fig. 14, like reference numerals are used for designating like or equivalent portions in the proposal shown in Fig. 29.

The display element drive device is capable of driving the organic EL elements in a display device of the dot matrix type or the organic EL elements 11a to 11n in a display device of the fixed segment type as shown in Fig. 14. Those organic EL elements 11a to 11n are connected in parallel. A voltage is applied to the parallel circuit of those EL elements. A plurality of drive reference sources (current sources) which are needed because the organic EL elements 11a to 11n have different areas are omitted. The luminance of the segments are made uniform. Particularly, a drive current fed to a parallel circuit of organic EL elements 11a to 11n is measured by a current measuring circuit 38, and control means 41 including a microcomputer chip controls, on the basis of the measurement result, an output voltage Vout output from a power source circuit (stabilized voltage supply circuit) 33 so as to keep constant the drive currents for the organic EL elements 11a to 11n arranged in parallel. The display element drive device thus constructed succeeds in omitting the reference organic EL element (designated 11z in Figs. 28 and 29) other than the organic EL elements 11a to 11n for actual light emission, which is essential to the conventional device, as proposal.

The preferred embodiments of the invention will be described.

〈Embodiment 6〉

〈Construction〉

Fig. 15 is a block diagram showing a concept of a display element drive device which is an embodiment 6 of the present invention. In Fig. 15, like reference numerals are used for designating like or equivalent portions in the proposal shown in Fig. 29.

The display element drive device, as shown in Fig. 15, is for driving an organic EL element panel 42 of the dot matrix type in which organic EL elements are arranged in a matrix of m x n. The display element drive device is made up of a column driver 43 for the column selection in the organic EL element panel 42, a row driver 44 for the row selection in the organic EL element panel 42, a variable constant-voltage source circuit (stabilized voltage supply circuit) 33 for supplying a drive power source through the column driver 43, a current measuring circuit 38 for measuring a drive current I flowing from the variable constant-voltage source circuit 33 to the organic EL element panel 42, and control means 41 which issues commands to select EL elements through the column driver 43 and the row driver 44, and controls an output voltage Vout output from the variable constant-voltage source circuit 33 in accordance with a drive current I measured by the current measuring circuit 38.

The organic EL element panel 42 used in this embodiment is specifically shown in Fig. 16. As shown, in the organic EL element panel, a plurality of anode layers 51(1) to 51(m), arranged in parallel, are linearly formed using transparent electrodes composed of ITO (indium-tin-oxide) formed on a transparent substrate, e.g., a glass substrate. Organic layers are formed on the rear side of the anode layers 51(1) to 51(m). A plurality of parallel cathode layers 52(1) to 52(n), composed of aluminum or the like, are formed on the rear sides of the organic layers, while being arranged at right angles to the anode layers 51(1) to 51(m). In operation, one of the anode layers 51(1) to 51(m) is selected by the column driver 43 and voltage is applied to the selected one. Further, one of the cathode layers 52(1) to 52(n) is selected by the row driver 44 and the selected one is earthed. As a result, current flows into the organic layer at a position where the selected anode layer (51(1) to 51(m)) intersects the selected cathode layer (52(1) to 52(n)), and the organic molecules are excited, and light is emitted through the transition of the excited organic molecules to the ground state. In this way, the positions (shaded in Fig. 16) where the selected anode layers (51(1) to 51(m)) intersects the selected cathode layers (52(1) to 52(n)) emit light in the form of dots (EL elements). Those dots are electrically connected in parallel between the output voltage Vout and ground.

The column driver 43, as shown in Fig. 16, includes a plurality of switching elements SA1 to Sam respectively connected to the anode layers 51(1) to 51(m) in the organic EL element panel 42. When any of the switching elements SA1 to SAm is turned on through the switching control by the control means 41, drive voltage is applied to the anode layer (51(1) to 51(m)) connected to the turned-on switching element (SA1 to Sam), from the variable constant-voltage source circuit 33 through the current measuring circuit 38. As a result, drive current I flows through the selected switching element.

The row driver 44, as shown in Fig. 16, includes a plurality of switching elements SK1 to SKn connected to the cathode layers 52(1) to 52(n) in the organic EL element panel 42. When any of the switching elements SK1 to SKn is turned on through the switching control by the control means 41, the cathode layer (52(1) to 52(n)) connected to the turned-on switching element (SK1 to SKn) is earthed to allow drive current I to flow therethrough.

The variable constant-voltage source circuit (stabilized voltage supply circuit) 33 converts instable voltage Vin supplied from a battery power supply (+B) into a stabilized output voltage Vout. Specifically, the variable constant-voltage source circuit 33 consists of a single NPN transistor (denoted as Q11 in the proposal shown in Fig. 29) as in the stabilized voltage supply circuit 33. In the stabilized voltage supply circuit 33, the transistor converts the voltage Vin received from the battery power supply (+B) into a stabilized voltage Vout as its emitter potential in accordance with a base potential received from the control means 41 (see Fig. 29).

The current measuring circuit 38 consists of a current mirror circuit as shown in Fig. 17. A pair of PNP transistors Tr0 and Tr1 are provided and a characteristic of one transistor is the same as of the other. Current 2I input to the current measuring circuit 38 is equally divided into two collector currents $I\alpha$ and $I\beta$ of the transistors Tr0 and Tr1. Of those collector currents $I\alpha$ and $I\beta$, the collector current $I\alpha$ output from the transistor Tr0 is output as drive current I. The collector current $I\beta$ derived from the transistor Tr1 flows into a given pull-down resistor Rpd. A voltage Vx at a node between the pull-down resistor Rpd and the collector of the transistor Tr1 is input as a current detect signal to the control means 41. With this circuit arrangement, the control means 41 is able to detect the drive current I at high precision. In Fig. 17, reference characters $R\alpha$ and $R\beta$ represent resistors connected to the emitters of the transistors Tr0 and Tr1.

Assuming that the $\mu$ factors of the transistors Tr0 and Tr1 are sufficiently large, then we have

$$I\alpha \times R\alpha = I\beta \times R\beta$$

Rearranging this equation, we have

$$I\alpha = I\beta \times R\beta/R\alpha \qquad (2)$$

The voltage Vx detected by the control means 41 is given by

$$Vx = I\beta \times Rpd$$

Rearranging the equation, we have

$$I\beta = Vx/Rpd \qquad (3)$$

Substituting the equation (3) into the equation (2), we have

$$I\alpha = Vx \text{ x } R\beta/(R\alpha \times Rpd) \qquad (4)$$

The control means 41 easily computes the collector current $I\alpha$ (i.e., the drive current I) of the transistor Tr0 by use of the equation (4) by putting the detect voltage Vx into the equation since the resistance values of the remaining resistors $R\beta$, $R\alpha$ and Rpd are known as design values.

The control means 41 consists of a microcomputer chip containing ROM, RAM and MPU, and is a functional component in which a software program prestored in the ROM or the like is loaded into the RAM, and it operates under control of the program. The microcomputer chip contains an analog to digital (A/D) converter. A current detect signal (voltage Vx) is input as an analog signal to the control means 41. Then, the A/D converter in the control means 41 converts the analog signal to a corresponding digital signal, and applies the digital signal to the variable constant-voltage source circuit 33 for its control. Also in outputting the voltage control signal directed to the variable constant-voltage source circuit 33, the control means 41 outputs a voltage control signal as an analog signal formed through a digital to analog (D/A) converter (not shown) contained therein, to the variable constant-voltage source circuit 33. The function of the control means 41 is the very same as the operation of the overall display element drive device to be described later.

〈Operation〉

An operation of the display element drive device thus arranged will be described. At the time of power on, data of the drive current I flowing through the organic EL element panel 42 is not present in the display element drive device. To avoid application of excessive drive voltage to the EL elements when ambient temperature is high, the control means 41 receives temperature sensed by a temperature sensor (not shown) in lieu of the drive current I measured, and outputs a voltage control signal based on the temperature received to the variable constant-voltage source circuit 33. The output voltage Vout from the variable constant-voltage source circuit 33 is set at a value defined by the control signal.

The control means 41 outputs row select signals ((I) to (n) in Fig. 18) to sequentially drive the switching elements SK1 to SKn in the row driver 44, and sequentially connects the cathode layers 52(1) to 52(n) to ground. At the same time, the control means applies column select signals ((O) in Fig. 18) to the column driver 43 while being in harmony with the row selection, in order to drive the dots (shaded in Fig. 16) dependent on the display contents. As a result, the switching elements SA1 to SAm related are selected, and the current I is fed to the anode layers 51(1) to 51(m) of the selected switching elements (see time intervals T1 to Tn in Fig. 18 (display drive intervals)). In this case, if required, those switching elements SA1 to SAm in the column driver 43 may simultaneously be turned on. In an alternative, only the necessary switching elements SA1 to SAm are sequentially turned on to turn on desired dots. The dots being turned on remain emitting light for a certain time duration after the switching elements SK1 to SKn and SA1 to Sam associated therewith are turned off. Therefore, the dots are seen as those continuously emit light by switching those switching elements SK1 to SKn and SA1 to SAm at high speed.

The control means 41 outputs a row select signal for selecting any (switching element SA1 in Fig. 18) of the switching elements SA1 to SAm in the column driver 43 and a column select signal for selecting any of the switching elements SK1 to SKn in the row driver 44, and turns on one selected dot (see shaded portions in Fig. 16) in the organic EL element panel 42. The lighting time duration of the dot, like the interval Ta (current measuring interval) in Fig. 18, is sufficiently shorter than the time intervals T1 to Tn so that the lighting of the dot is not marked.

In this state, the current measuring circuit 38 measures a drive current I and sends the measurement result as a current detect signal to the control means 41. The measurement result is for the specific one dot as described one. A reference value of the drive current I for the specific one dot is set in advance in the control means 41. When the value of the measured drive current I applied as the current detect signal is different from the reference value as preset, the control means 41 produces such a voltage control signal as to reduce the difference between the compared current values to zero, and applies it to the variable constant-voltage source circuit 33. As a result, the output voltage Vout from the variable constant-voltage source circuit 33 is adjusted depending on such a voltage control signal.

Subsequently, the display drive intervals T1 to Tn and the current measuring interval TA are repeated to adjust the output voltage Vout, so that the luminance of the dots is kept constant.

As described above, this embodiment, unlike the proposal already described, is able to measure the drive current I not using the reference organic EL element (designated 11z in Figs. 28 and 29). Accordingly, the cost to manufacture is reduced by the cost of the reference organic EL element 11z, and the fabrication area is reduced, thereby increasing the space efficiency. Further, the display element drive device is free from failure of the reference organic EL element 11z and its element deterioration, which essentially occurs in the device of the proposal. Additionally, the current measuring accuracy is remarkably improved since the drive current I flowing through the actual organic EL elements 11a to 11n is directly measured.

〈Embodiment 7〉

〈Construction〉

Fig. 19 is a block diagram showing a display element drive device which constitutes an embodiment 7 of the present invention. Fig. 20 is a circuit diagram showing the display element drive device of Fig. 19. In those figures, like reference numerals are used for designating like or equivalent portions used in the embodiment 6.

In the display element drive device of this embodiment, the control means 41 includes a microcomputer chip containing ROM, RAM, CPU and the like. The control means 41 produces a voltage control signal for transmission to a variable constant-voltage source circuit (stabilized voltage supply circuit) 33, whereby the output voltage (drive voltage) Vout of the variable constant-voltage source circuit 33 is controlled. More specifically, the control means 41 detects a drive current I flowing through a current measuring circuit 38, which is inserted between voltage switching circuit 15 (15a to 15n) for the organic EL elements 11a to 11n and the variable constant-voltage source circuit 33. A current value comparing circuit 53 judges whether or not the measured drive current I is within a predetermined tolerance range by comparison. If the drive current I is out of the tolerance range, the control means adjusts the output voltage (drive voltage) Vout of the variable constant-voltage source circuit 33.

The organic EL elements 11a to 11n are electrically connected between the drive voltage Vout and ground in parallel. This forms a parallel circuit.

The variable constant-voltage source circuit 33. as shown in Fig. 20, includes an NPN transistor (stabilized voltage supply element) Q11 for converting an input voltage Vin into an output voltage Vout, an operational amplifier 54 for controlling the output voltage Vout by controlling a base voltage of the NPN transistor Q11, and a pair of voltage dividing resistors 55 and 57 for detecting a level of the output voltage Vout from the NPN transistor Q11 and feeding the resultant back to the operational amplifier 54. Thus, the NPN transistor Q11 functions as a voltage follower circuit of the operational amplifier 54. A potential at the node between the resistors 55 and 57 is fed back to the noninverting input terminal of the operational amplifier 54, whereby the output voltage Vout of the NPN transistor Q11 is stabilized. With such an arrangement, also when the input voltage Vin varies, a variation of the potential at the node between the resistors 55 and 57 is fed back to the operational amplifier 54. The operational amplifier 54 adjusts the output voltage Vout of the NPN transistor Q11 so as to reduce the voltage variation. Therefore, the luminance of all the segments (organic EL elements 11a to 11n) is stabilized.

A voltage control signal output from the control means 41 is input to the noninverting input terminal of the operational amplifier 54. Accordingly, as will be described later, the control means 41 applies a voltage control signal to the noninverting input terminal of the operational amplifier 54 in accordance with a comparison result signal from the current value comparing circuit 53. In this way, the control means 41 controls the output voltage Vout of the NPN transistor Q11 in accordance with the measured current value from the current measuring circuit 38.

The operational amplifier 54 is arranged such that two input signals, equal in magnitude, are input to the noninverting input terminal and inverting input terminal of the amplifier. When those input signals become different in magnitude from each other, an output signal output from the amplifier becomes different from the output signal when the input signals are equal. Accordingly, the voltage at the base of the NPN transistor Q11 is varied. A potential at the node between the voltage dividing resistors 55 and 57, which is connected to the inverting input terminal of the operational amplifier 54, quickly follows up a variation of a stepwise signal, which is derived from the control means 41 including the microcomputer chip, and settles down, if the frequency characteristic of the voltage follower circuit consisting of the operational amplifier 54 and the NPN transistor Q11 is for high speed, viz., it ranges from several tens kHz to several hundreds kHz (see 82) in Fig. 22). The output voltage Vout also settles down likewise.

The current measuring circuit 38 consists of a current mirror circuit as shown in Fig. 20. A pair of PNP transistors Tr0 and Tr1 are symmetrically connected to each other and a characteristic of one transistor is the same as of the other. Current 2I input to the current measuring circuit 38 is equally divided into two collector currents $I\alpha$ and $I\beta$ of the transistors Tr0 and Tr1. Of those collector currents $I\alpha$ and $I\beta$, the collector current $I\alpha$ output from the transistor Tr0 is output as drive current I for the organic EL elements 11a to 11n . The collector current $I\beta$ derived from the transistor Tr1 flows into pull-down resistors Rdq and Rpd. A voltage Vx at a node between the pull-down resistors Rdq and Rpd is input as a current detect signal to the current value comparing circuit 53.

The current value comparing circuit 53 judges whether or not the current value output from the current measuring circuit 38 is within a predetermined tolerable range, and inputs to the control means 41 the result of the judgement in the form of binary data of n bits. Therefore, there is no need of using the A/D converter, so that cost of manufacturing the control means 41 is reduced by the cost of the A/D converter. In this respect, the embodiment 7 is advantageous over the embodiment 6 in which the measure current is directly input as an analog signal to the control means 41.

More specifically, the current value comparing circuit 53 is composed of an upper-limit comparator 61 and a lower-limit comparator 62. The upper-limit comparator 61 compares a current detect signal (voltage Vx) derived from the current measuring circuit 38 with the upper limit value $\alpha$ of the tolerance range. The lower-limit comparator 62 compares a current detect signal (voltage Vx) derived from the current measuring circuit 38 with the lower limit value $\alpha$ of the tolerance range.

The upper-limit comparator 61 includes a first Zener diode 63 for defining the upper limit $\alpha$ of the tolerance range, a resistor 64 connected between a power source Vcc and the Zener diode 63, and a first comparator 65 which is connected at the noninverting input terminal to a node between the Zener diode 63 and the resistor 64, and at the inverting input terminal to a current detect signal (voltage Vx) derived from the current measuring circuit 38. When the current detect signal (voltage Vx) is lower in value than the upper limit value $\alpha$ defined by the Zener diode 63, it outputs a high level signal whose level is substantially equal to that of the power source Vcc. When the current detect signal (voltage Vx) is higher in value than the upper limit value a defined by the Zener diode 63, it outputs a low level signal whose level is substantially equal to a ground level. When the current detect signal (voltage Vx) is equal in value to the upper limit value $\alpha$ defined by the Zener diode 63, the output signal of the first comparator 65 may be a high level signal or a low level signal. In this embodiment, it is a low level signal which is higher than the upper limit value $\alpha$ (viz., out of the tolerance range).

The lower-limit comparator 62 is composed of a second Zener diode 66 for defining the lower limit value $\beta$ of the tolerance range, a resistor 67 between the power source Vcc and the second Zener diode 66, and a second comparator 68 which is connected at the noninverting input terminal to a node between the second Zener diode 66 and the resistor 67 and at the inverting input terminal to the current detect signal (voltage Vx) derived from the current measuring circuit 38. When the current detect signal (voltage Vx) is smaller in value than the lower limit value $\beta$, it outputs to the control means 41 a high level signal substantially equal in level to the power source Vcc. When the current detect signal (voltage Vx) is larger in value than the lower limit value $\beta$, it outputs to the control means 41 a low level signal substantially equal in level to the ground level. When the current detect signal (voltage Vx) is equal in value to the lower limit, value $\beta$ defined by the second Zener diode 66, the output signal of the second comparator 68 may be a high level signal or a low level signal. In this embodiment it is a high level signal as in the case where it is smaller than the lower limit value $\beta$ (out of the tolerance range). The control means 41 drives the voltage switching circuit 15 for selecting an organic EL element or elements of those organic EL elements 11a to 11n, and controls the output voltage Vout from the variable constant-voltage source circuit 33 in accordance with a comparison result signal from the current value comparing circuit 53. The control means 41 includes a microcomputer chip containing ROM, RAM, MPU and the like, loads a software program prestored in the ROM or the like into the RAM, and operates under control of the program. That is, it is a functional component so operated. The control means 41 of this embodiment does not include the A/D converter, while that of the embodiment 6 indispensably includes it. When the comparison result signal output from the current value comparing circuit 53 is output in the form of binary data of a high level signal or a low level signal, it processes the comparison result as the digital signal. In outputting the voltage control signal to the variable constant-voltage source circuit 33, it outputs a voltage control signal as an analog signal to the variable constant-voltage source circuit 33 through a D/A converter (not shown).

[Table 1]

| | | | | |
|---|---|---|---|---|
| Upper limit comparing signal | L | L | H | H |
| Lower limit comparing signal | L | H | L | H |
| | | | | |
| drive current level | $Vx \geq \alpha$ | Data input is not allowed | $\beta < Vx < \alpha$ | $Vx \leq \beta$ |
| | | | | |
| D/A output voltage control | Decrement by one unit | Not changed | Not changed | Increment by one unit |
| | | | | |

Table 1 shows relationships between the comparison result signals derived from the current value comparing circuit 53 and the process by the control means 41. In Table, 1, a variable $\alpha$ is the upper limit value defined by the Zener diode 63 in the upper-limit comparator 61, and $\beta$ is the lower limit value defined by the second Zener diode 66 in the lower-limit comparator 62. $\alpha > \beta$. Also in Table 1, the comparison result signal output from the upper-limit comparator 61 is referred to as an "upper limit comparison signal"; the comparison result signal from the lower-limit comparator 62 is referred to as a "lower limit comparison signal"; and a voltage control signal applied from the control means 41 to the variable constant-voltage source circuit 33 is referred to as a "D/A output voltage".

When, as shown in Table 1, the control means receives a low level signal L from the first comparator 65 of the upper-limit comparator 61 and a low level signal L also from the second comparator 68 of the lower-limit comparator 62, the control means judges that the current detect signal (voltage Vx) is in excess of the upper limit value $\alpha$ and out of the tolerance range. Accordingly, in this case, the control means 41 decrements by one unit a level of the D/A output voltage applied to the variable constant-voltage source circuit 33 (see Table 1 and Fig. 21).

When the first comparator 65 of the upper-limit comparator 61 outputs a low level signal L, and the second comparator 68 of the lower-limit comparator 62 outputs a high level signal H, the current detect signal (voltage Vx) is larger than the upper limit value $\alpha$ but smaller than the lower limit value $\beta$. Such situation does not hold theoretically. Thence, the control means judges that input data (comparison result by the current value comparing circuit 53) contains an error, and the inputting of data is not allowed, and that the input data is invalid and does not change the D/A output voltage in level.

When the control means receives a high level signal H from the first comparator 65 of the upper-limit comparator 61 and a low level signal L from the second comparator 68 of the lower-limit comparator 62, the control means judges that a drive current I measured by the current measuring circuit 38 is proper since the current detect signal (voltage Vx) is smaller than the upper limit value $\alpha$ but larger than the lower limit value $\beta$ (viz., with the tolerance range), and that does not change a level of the D/A output voltage, as shown in Table 1 and Fig. 21.

When the control means receives a high level signal H from the first comparator 65 of the upper-limit comparator 61 and a high level signal H from the second comparator 68 of the lower-limit comparator 62, the control means 41 judges that the current detect signal (voltage Vx) is smaller than the lower limit value $\beta$ and out of the tolerance range, and hence increments by one unit the level of the D/A output voltage applied o the operational amplifier 54 of the variable constant-voltage source circuit 33 (see Table 1 and Fig. 21).

Since the control means 41 includes a microcomputer chip, the comparison result signals (upper limit comparison signal and the lower limit comparison signal) from the comparators 61 and 62 of the current value comparing circuit 53 are input to the control means 41 every several tens ms to several hundreds ms. The control means 41 updates the D/A output voltage by the comparison result signal. As shown in Fig. 22A, it is discrete with respect to the time axis. When such a control is carried out by the control means 41, a potential at the node between the voltage dividing resistors 55 and 57 is fed as a continuous signal back to the inverting input terminal of the operational amplifier 54, within the variable constant-voltage source circuit 33. Through the automated feedback operation, the output voltage Vout of the variable constant-voltage source circuit 33 continuously varies as shown in Fig. 22B.

〈Operation〉

An operation of the display element drive device will be described.

The control means 41 sends a switching control signal so as to selectively operate the voltage switching circuits 15a to 15n and feeds a drive current I to a selected organic EL element of those organic EL elements 11a to 11n, thereby turning on the selected one. In this case, plural voltage switching circuits of those voltage switching circuits 15a to 15n may be turned on simultaneously or sequentially, thereby turning on the selected ones of those organic EL elements 11a to 11n. After the voltage switching circuits 15a to 15n associated with the organic EL elements 11a to 11n are turned off, the afterimage is left for a certain time duration. Therefore, the organic EL elements 11a to 11n are seen as those continuously emit light by voltage switching circuits 15a to 15n at high speed.

The control means 41 turns on one or predetermined number of those voltage switching circuits 15a to 15n for a predetermined short time at proper timings. For example, as in the embodiment 6, it may be executed at other timings than those for actual lighting on. In the case of the short time lighting on, the afterimage is left as the human being sees it. The selecting operation for lighting on those organic EL elements 11a to 11n is negligible in visual perception by operating the voltage switching circuits 15a to 15n at high speed. Even in an actual lighting on, the control means 41 unexpectedly turns on only the selected one or plural voltage switching circuits 15a to 15n, its state may be utilized. At given timings of the turning on, the current measuring circuit 38 measures a drive current I, and sends the measurement result as a current detect signal to the current value comparing circuit 53.

In the current value comparing circuit 53, the upper-limit comparator 61 detects as to if the current detect signal derived from the current measuring circuit 38 is smaller than a predetermined upper limit value $\alpha$. If it is smaller than the upper limit value $\alpha$, it produces a high level signal for transmission to the control means 41. When it is equal to or larger than the upper limit value $\alpha$, it outputs a low level signal to the control means 41. The lower-limit comparator 62 detects as to if the current detect signal derived from the current measuring circuit 38 is larger than a given lower limit value $\beta$. When the current detect signal is larger than the lower limit value $\beta$, it produces a low level signal to the control means 41. When the current is equal to or smaller than the lower limit value $\beta$, it produces a high level signal for transmission to the control means 41. As a result, a comparison result signal output from the current value comparing circuit 53 is applied as a binary signal of two bits to the control means 41.

When the control means 41 receives a low level signal L from the first comparator 65 of the upper-limit comparator 61 and a low level signal also from the second comparator 68 of the lower-limit comparator 62, it judges that the current detect signal (voltage Vx) is larger than the upper limit value $\alpha$ and out of the tolerance range, and decrements by one unit the level of the D/A output voltage to the operational amplifier 54 of the variable constant-voltage source circuit 33 (see Table 1 and Fig. 21).

When it receives a low level signal L from the first comparator 65 of the upper-limit comparator 61 and a high level signal H from the second comparator 68 of the lower-limit comparator 62, the current detect signal (voltage Vx) is larger than the upper limit value a but smaller than the lower limit value $\beta$. Such a situation does not occur logically. The control means judges that the input data (comparison result by the current value comparing circuit 53) contains an error, and hence judges that the inputting of such data is not allowed, and leaves the D/A output voltage level unchanged while ignoring the input data.

When receiving a high level signal H from the first comparator 65 of the upper-limit comparator 61 and a low level signal L from the second comparator 68 of the lower-limit comparator 62, the current detect signal (voltage Vx) is smaller than the upper limit value $\alpha$ but larger than the lower limit value $\beta$ (within the tolerance range). The control means judges that the drive current I measured by the current measuring circuit 38 is proper, and leaves the D/A output voltage unchanged (Table 1 and Fig. 21).

When receiving a high level signal H from the first comparator 65 of the upper-limit comparator 61 and a high level signal H also from the second comparator 68 of the lower-limit comparator 62, the current detect signal (voltage Vx) is smaller than the lower limit value $\beta$ and out of the tolerance range. Thence, the control means 41 increments by one unit the level of the D/A output voltage applied to the operational amplifier 54 of the variable constant-voltage source circuit 33 (see Table 1 and Fig. 21).

The operational amplifier 54 of the variable constant-voltage source circuit 33 varies the output voltage Vout of the NPN transistor Q11 in accordance with the voltage control signal that is received at the noninverting input terminal from the control means 41 (in Fig. 22A). Within the variable constant-voltage source circuit 33, a potential at the node between the voltage dividing resistors 55 and 57 is fed as a continuous signal back to the inverting input terminal of the operational amplifier 54. Through the automated feedback operation, the output voltage Vout of the variable constant-voltage source circuit 33 continuously varies as in Fig. 22B. When the drive current I varies into a value out of the drive current I, the output voltage Vout of the variable constant-voltage source circuit 33 is automatically adjusted till the drive current I falls within the tolerance range. The drive current I is approximated to a fixed value. Therefore, the luminance of the organic EL elements 11a to 11n is stabilized.

While in the embodiment 6, the drive current I measured by the current measuring circuit 38 is input as an analog signal to the control means 41, the embodiment 7 judges as to whether or not it is within the tolerable range by use of the current value comparing circuit 53. And the judgement result is input tot he control means 41 in the form of a binary signal. The binary signal as a digital signal is processed by the control means 41. Therefore, there is no need of providing the expensive A/D converter within the control means 41. Accordingly, the cost to manufacture is reduced by the cost of the omitted circuit. Further, there is no need of driving the A/D converter within the control means 41. Because of this, sufficient process can be carried out by a microcomputer chip whose operating frequency is relatively low. This also contributes to cost reduction.

While in this embodiment, the control means 41 judges whether the drive current I is permitted or prohibited to flow, a procedure shown in a flow chart shown in Fig. 23 may be used instead.

The flow chart process follows. In a step S1 in Fig. 23, the control means detects as to whether or not a current detect signal received from the current measuring circuit 38 is equal to or larger than a given upper limit value $\alpha$. If it is equal to or larger than the upper limit value $\alpha$, the control means advances to a step S2, and decrements by one unit the voltage level of the voltage control signal. If it is smaller than the upper limit value $\alpha$ in the step S1, the control means advances to a step S3.

The step S3 detects as to whether or not the current detect signal received from the current measuring circuit 38 is equal to or smaller than the lower limit value $\beta$ by use of the lower-limit comparator 62. If it is equal to or smaller than the lower limit value $\beta$, the control means advances to a step S4, and increments by one unit the voltage level of the voltage control signal. If it is equal to or larger than the lower limit value $\beta$ in he step S3, the control means maintains its state, and ends the adjusting process.

The method mentioned above easily detects if the drive current I is within the tolerance range and easily adjusts the output voltage Vout of the variable constant-voltage source circuit 33 on the basis of the detection result.

The current mirror circuit is used for the current measuring circuit 38 in each of the embodiments mentioned above. Alternatively, the drive current I may be measured by measuring a potential across a given resistor.

As seen from the foregoing description, in the display element drive device of the item 1, a single stabilized voltage supply circuit supplies a stabilized voltage to one or a plurality of EL elements. At this time, a current measuring circuit measures a drive current that is fed to the EL elements through the switching circuit from the stabilized voltage supply circuit. Control means applies a voltage control signal to the stabilized voltage supply circuit on the basis of the result of measuring by the current measuring circuit so that the driving states of the EL elements are uniform, whereby the stabilized voltage of the stabilized voltage supply circuit is adjusted. Therefore, the display element drive device of the invention, unlike the proposal, may measure the drive current not using the reference organic EL element exclusively provided. Accordingly, the cost to manufacture is reduced by the cost of the organic EL element omitted. The area occupied by the elements is reduced, and hence the space efficiency is improved. The display element drive device of the invention, unlike the proposal, is free from the problems of failure and element deterioration of the organic EL elements. Further, the drive current flowing through the actual organic EL elements is directly measured, so that the current measuring accuracy is remarkably improved.

In the display element drive device of the item 2, the drive current measured by the current measuring circuit is not directly input as an analog signal to the control means. A current comparing circuit for judging as to whether or not the drive current measured by the current measuring circuit is within a predetermined tolerance range is located between the current measuring circuit and the control means. The current comparing circuit inputs a binary signal, which represents the result of judging as to whether or not the drive current measured by the current measuring circuit is within the tolerance range, to the control means. Accordingly, there is no need of providing the expensive A/D converter within the control means when the binary signal is processed as a digital signal by the control means. The cost to manufacture is reduced by the cost of the circuit omitted. Further, there is no need of driving the A/D converter within the control means. Because of this, sufficient process can be carried out by use of microprocessor whose operating frequency is relatively low. And the cost to manufacture is also reduced correspondingly.

In the display element drive device of the item 3, the control means turns on a predetermined EL element or predetermined EL elements of the EL elements for a predetermined short time when the current measuring circuit is operated for measurement. Therefore, the drive current may always be measured under the fixed lighting-on conditions. In this case, the EL elements are turned on only for a short time. Accordingly, the afterimage remains in a state that the human watches it. The switching operation of the EL elements is negligible in visual perception. As a result, the display quality deterioration is lessened.

## Claims

**1.** A drive device for EL elements comprising:

temperature detecting means for detecting ambient temperature of each said EL element and outputting an output value corresponding to the detected temperature; and
control means which receives said output value of said temperature detecting means and adjusts the luminance of said EL element to be constant in value with the ambient temperature of said EL element.

**2.** The drive device for EL elements according to claim 1, wherein

said control means has a function to determine a drive voltage for causing said EL element to emit light at a predetermined luminance value at said output value of said temperature detecting means, and adjusts the luminance of said EL element by driving said EL element at said drive voltage.

**3.** The drive device for EL elements according to claim 2, wherein

said control means contains data indicative of a drive voltage which is set corresponding to said output value of said temperature detecting means and causes said EL element to emit light at a predetermined luminance value, and determines said drive voltage on the basis of said data.

**4.** The drive device for EL elements according to claim 1, wherein

the on/off operation of said EL elements is controlled at a predetermined duty, and said control means has a function to determine a duty ratio of said EL element for causing said EL element to luminesce at a predetermined luminance value at said output value of said temperature detecting means, and adjusts the luminance of said EL element by driving said EL element by controlling the on/off operation of said EL element at said duty ratio.

**5.** The drive device for EL elements according to claim 4, wherein

said control means contains data indicative of a duty ratio which is set corresponding to said output value of said temperature detecting means and causes said EL element to luminesce at a predetermined luminance value, and determines said duty ratio on the basis of said data.

**6.** A drive device for EL elements comprising:

light emission detecting means for detecting a light emitting state of each said EL element and outputting an output value corresponding to the detected light emitting state; and
control means which receives said output value of said light emitting state detecting means and adjusts the luminance of said EL element to be constant in value on the basis of said output value received.

**7.** The drive device for EL elements according to claim 6, wherein

said control means computes a luminance of said EL element by using said output value of said light emission detecting means, and has a function to vary a drive voltage of said EL element so that said luminance becomes equal to a predetermined reference luminance, and adjusts the luminance of said EL element by driving said EL element at the varied drive voltage.

**8.** The drive device for EL elements according to claim 6, wherein

the on/off operation of said EL elements are controlled at a predetermined duty ratio, and said control means computes a luminance of said EL element by using said output value of said light emission detecting means, and has a function to vary a duty ratio of said EL element so that said luminance becomes equal to a predetermined reference luminance, and adjusts the luminance of said EL element by controlling the on/off operation of said EL element at the varied duty ratio.

**9.** The drive device for EL elements according to claim 8, wherein

said control means computes a difference between a luminance value computed from said output value of said light emission detecting means and said reference luminance value, and varies the duty ratio of said EL element at the time of detecting the light in accordance with said computed luminance difference, so that a duty ratio for providing said reference luminance value is obtained.

**10.** An EL display device comprising:

EL elements having such a matrix electrode structure that first and second electrodes of a plurality of display segments are arranged into a plurality of groups of segments, said electrodes being connected together for each group by a column connection wire and a row connection wire;
a plurality of drive voltage sources being connected to said column connection wires and selectively outputting a plurality of drive voltage values set for said display segments connected to said column connection wires;
a plurality of first switches inserted between said drive voltage sources and said column connection wires;
a plurality of second switches inserted between said row connection wires and predetermined potential sources; and
control means operating such that said control means selectively turns on said first switches while turning on said second switches in a time divisional manner, thereby driving said EL elements to emit light, and when said EL elements are driven for light emission, said control means causes said drive voltage sources to vary their output voltages to the drive voltage values set for said display segments selected by said first and second switches.

**11.** The EL display device according to claim 10, wherein

each said column connection wire is such that lead-out electrodes formed integral with said first electrodes grouped are connected together by an electric wire, and
said plurality of drive voltage values of said drive voltage sources are each defined by the current value set for each said display segment and a resistance value of each said lead-out electrode corresponding to said display segments.

**12.** A display element drive device for driving one or a plurality of EL elements, comprising:

a single stabilized voltage supply circuit for supplying a stabilized voltage to said EL elements;
a switching circuit for selecting the supply or non-supply of said stabilized voltage from said stabilized voltage supply circuit to said EL elements;
a current measuring circuit for measuring drive current fed to said EL elements through said switching circuit from said stabilized voltage supply circuit; and
control means operating such that said control means drives and turns on a predetermined EL element of said EL elements at a predetermined timing through said switching circuit, when a drive display of said EL element is presented by operating said switching circuit, said control means applies a voltage control signal to said stabilized voltage supply circuit, on the basis of the result of measuring by said current measuring circuit so that the luminance of said EL elements are uniform in values, whereby said stabilized voltage of said stabilized voltage supply circuit is adjusted.

**13.** The display element drive device according to claim 12, wherein

a current comparing circuit for judging as to whether or not said drive current measured by said current measuring circuit is within a predetermined tolerance range is located between said current measuring circuit and said control means, and said current comparing circuit inputs a binary signal, which represents the result of judging as to whether or not said drive current measured by said current measuring circuit is within the tolerance range, to said control means.

**14.** The display element drive device according to claim 12 or 13, wherein

said control means turns on a predetermined EL element or predetermined EL elements of said EL elements for a predetermined short time when said current measuring circuit is operated for measurement.

**15.** The display element drive device according to claim 12 to 14, wherein

said control means adjusts, at the time of power on, said stabilized voltage of said stabilized voltage supply circuit on the basis of the result of detecting temperature by a predetermined temperature detecting means.

FIG. 1

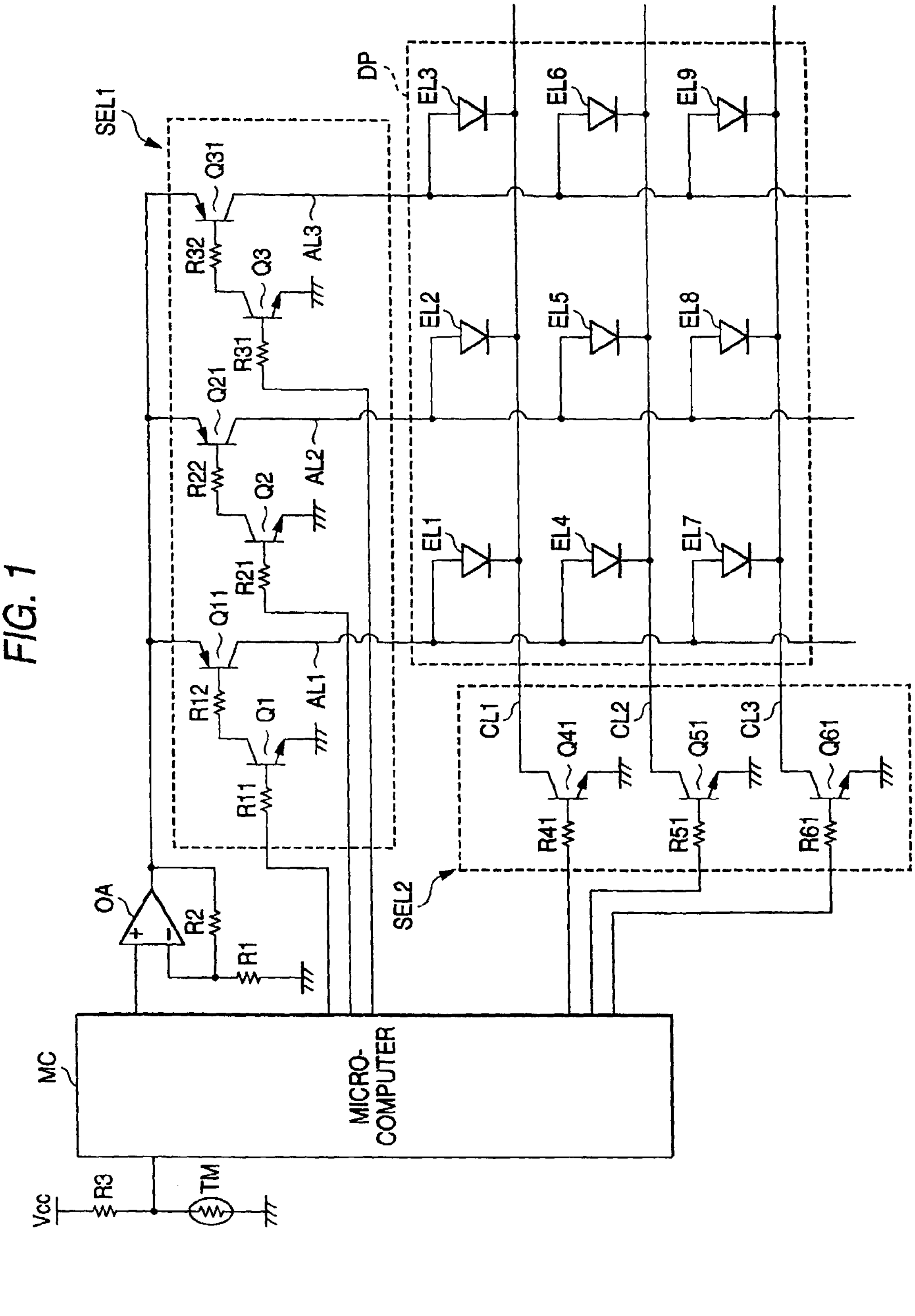
SEL1
Q31
R32
Q3
AL3
Q21
R31
R22
Q2
AL2
Q11
R21
R12
Q1
AL1
R11
DP
EL3
EL6
EL9
EL2
EL5
EL8
EL1
EL4
EL7
CL1
CL2
CL3
Q41
Q51
Q61
R41
R51
R61
SEL2
OA
R2
R1
MC
MICRO-
COMPUTER
Vcc
R3
TM

FIG. 2

| TEMPERATURE (°C) | APPLICATION VOLTAGE (V) |
|---|---|
| 40 | 6.0 |
| 30 | 6.5 |
| 20 | 7.0 |
| 10 | 7.4 |
| 0 | 7.8 |
| -10 | 8.2 |
| -20 | 8.6 |

FIG. 3

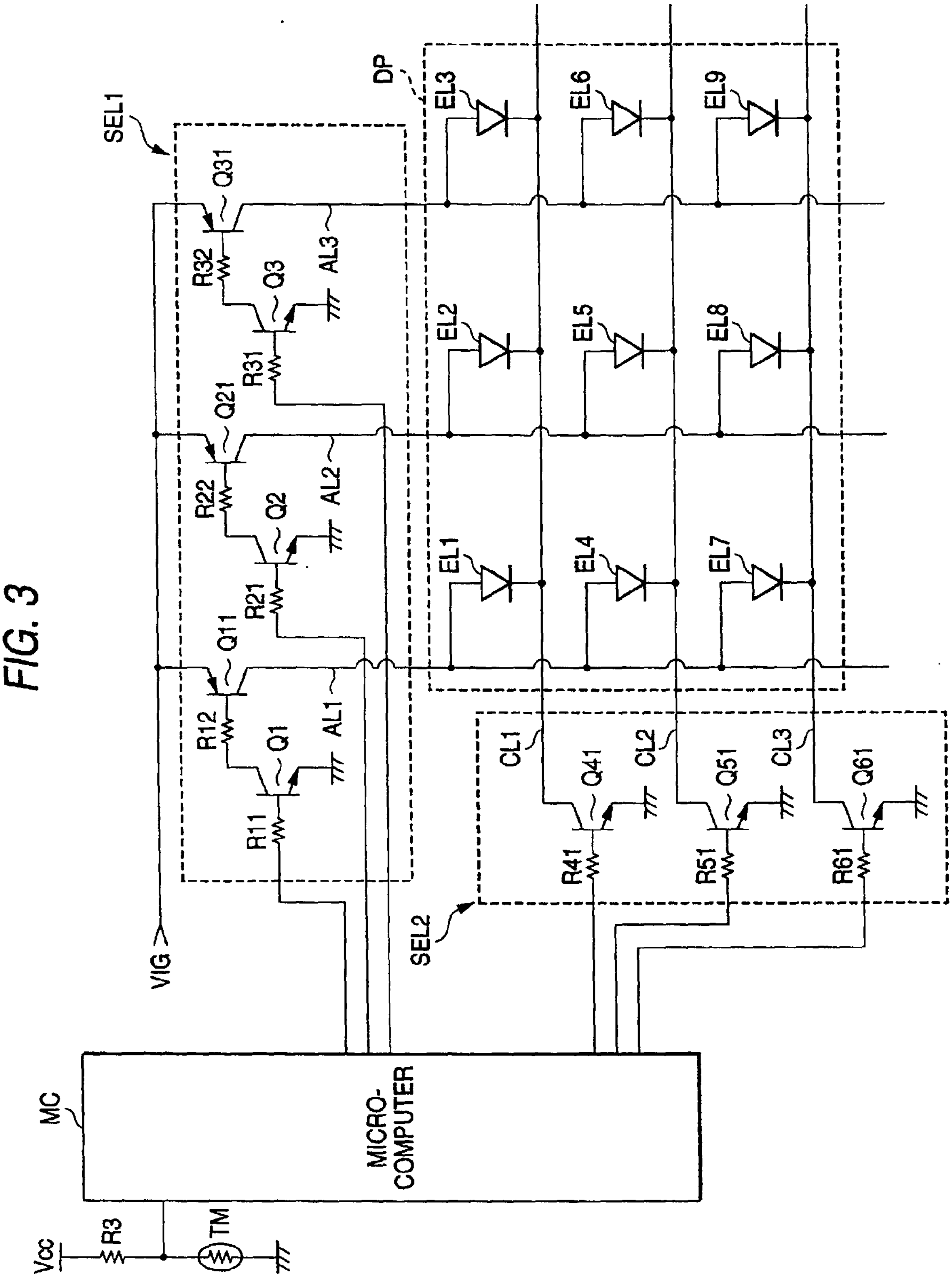
SEL1
Q31
R32
Q3
AL3
Q21
R31
R22
Q2
AL2
Q11
R21
R12
Q1
AL1
R11
VIG
DP
EL3
EL6
EL9
EL2
EL5
EL8
EL1
EL4
EL7
CL1
CL2
CL3
Q41
Q51
Q61
R41
R51
R61
SEL2
MC
MICRO-
COMPUTER
Vcc
R3
TM

*FIG. 4*

| TEMPERATURE (°C) | LUMINANCE ($cd/cm^2$) | DUTY RATIO (%) |
|---|---|---|
| 40 | 2500 | 10 |
| 30 | 1800 | 14 |
| 20 | 1250 | 20 |
| 10 | 810 | 31 |
| 0 | 560 | 45 |
| -10 | 370 | 68 |
| -20 | 250 | 100 |

FIG. 5

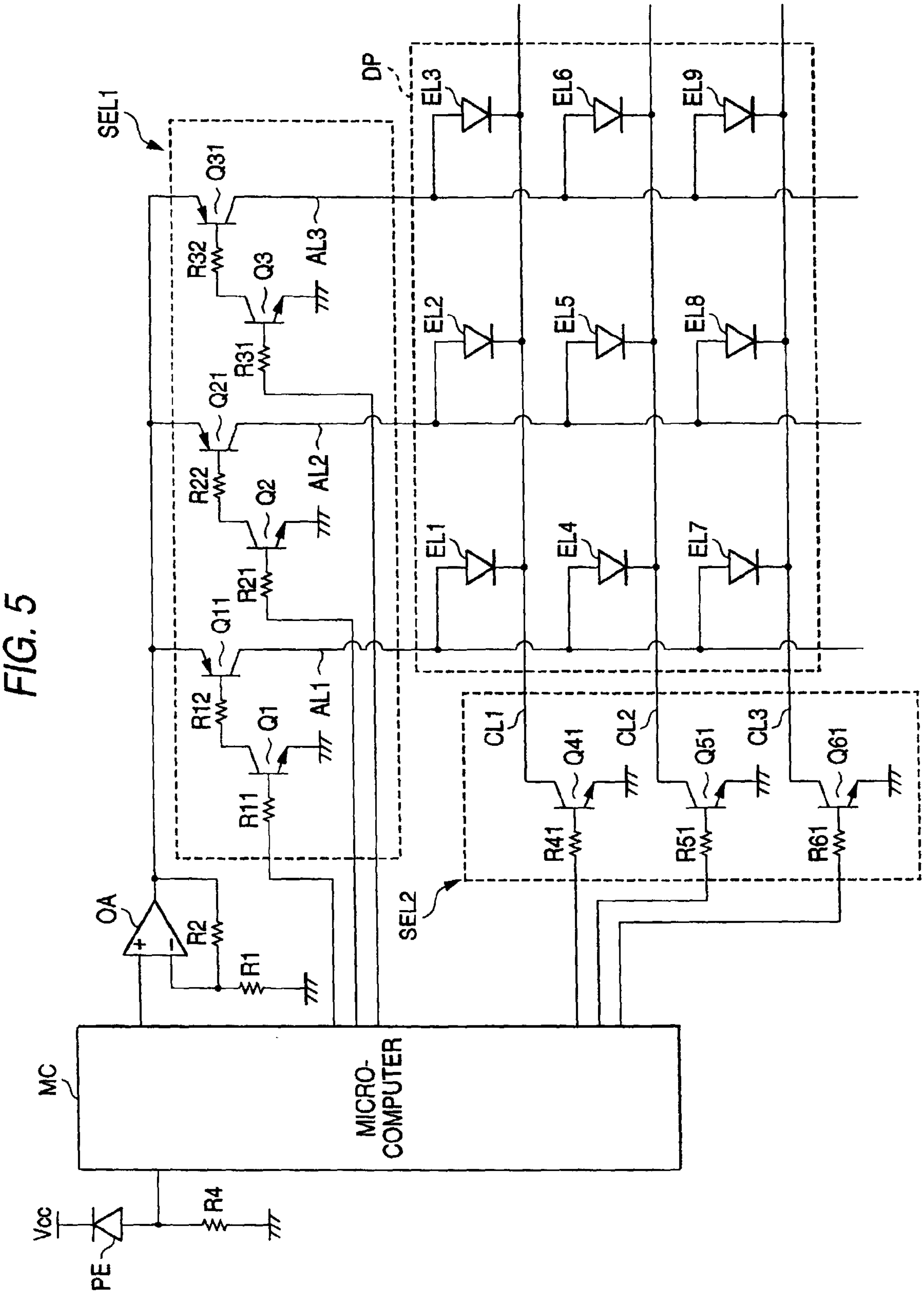
SEL1
Q31
Q21
Q11
R32
R22
R12
Q3
Q2
Q1
AL3
AL2
AL1
R31
R21
R11
DP
EL1
EL2
EL3
EL4
EL5
EL6
EL7
EL8
EL9
OA
R2
R1
MC
MICRO-
COMPUTER
CL1
CL2
CL3
Q41
Q51
Q61
R41
R51
R61
SEL2
Vcc
PE
R4

FIG. 6

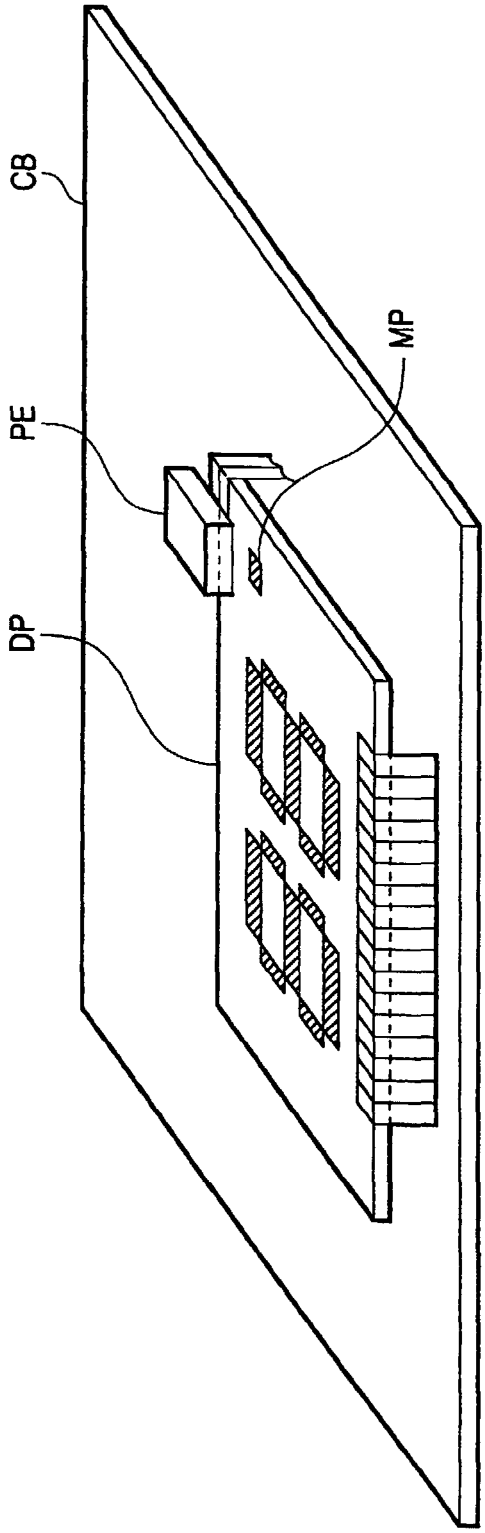

FIG. 7

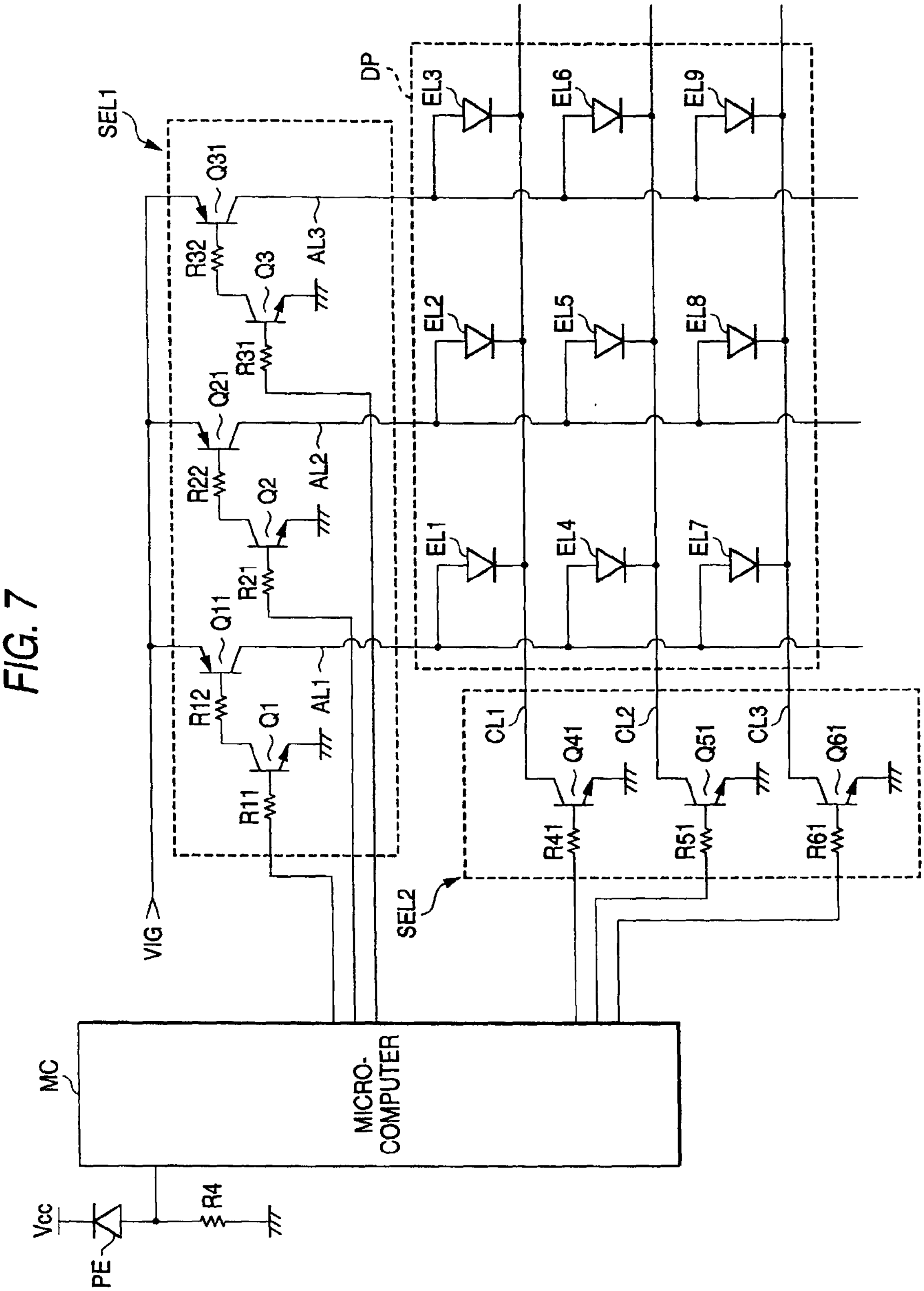
SEL1
Q31
R32
Q3
AL3
R31
Q21
R22
Q2
AL2
R21
Q11
R12
Q1
AL1
R11
VIG
DP
EL3
EL6
EL9
EL2
EL5
EL8
EL1
EL4
EL7
CL1
CL2
CL3
Q41
Q51
Q61
R41
R51
R61
SEL2
MC
MICRO-
COMPUTER
Vcc
PE
R4

FIG. 8

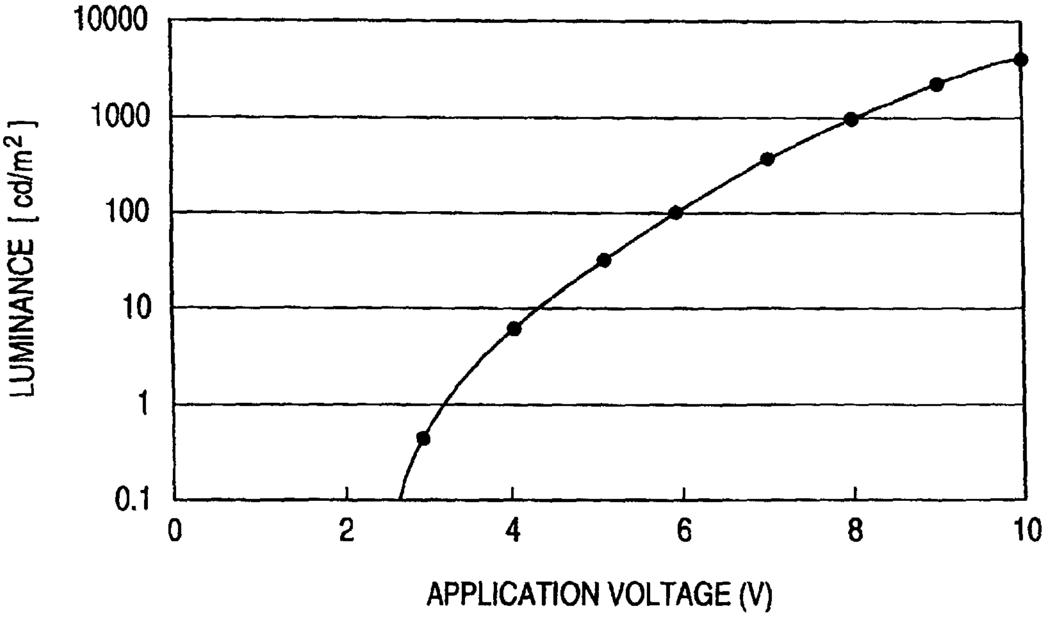
10000
1000
100
10
1
0.1
LUMINANCE [ cd/m2 ]
0
2
4
6
8
10
APPLICATION VOLTAGE (V)

FIG. 9

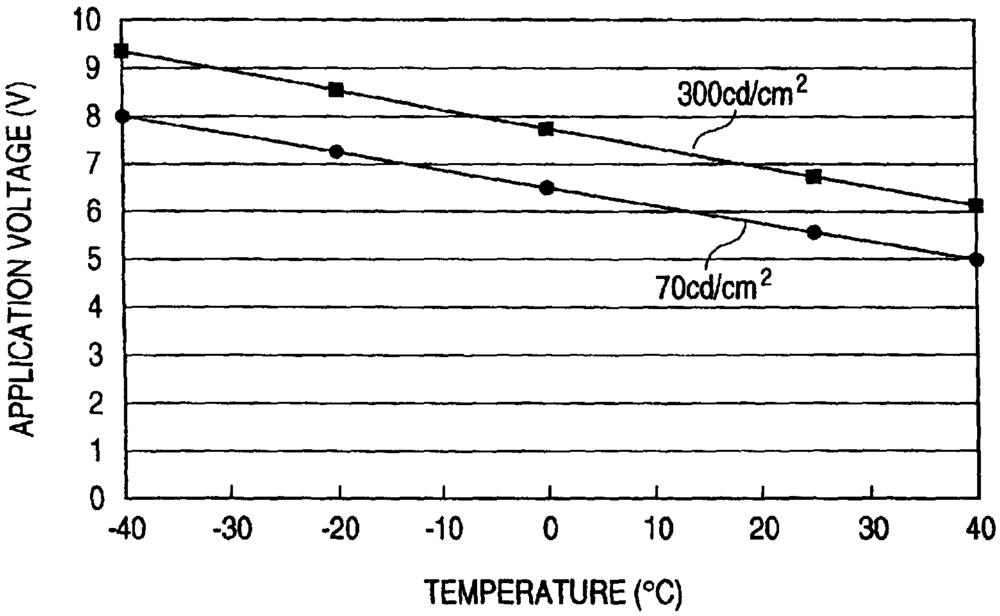
10
9
8
7
6
5
4
3
2
1
0
APPLICATION VOLTAGE (V)
300cd/cm2
70cd/cm2
-40
-30
-20
-10
0
10
20
30
40
TEMPERATURE (°C)

FIG. 10

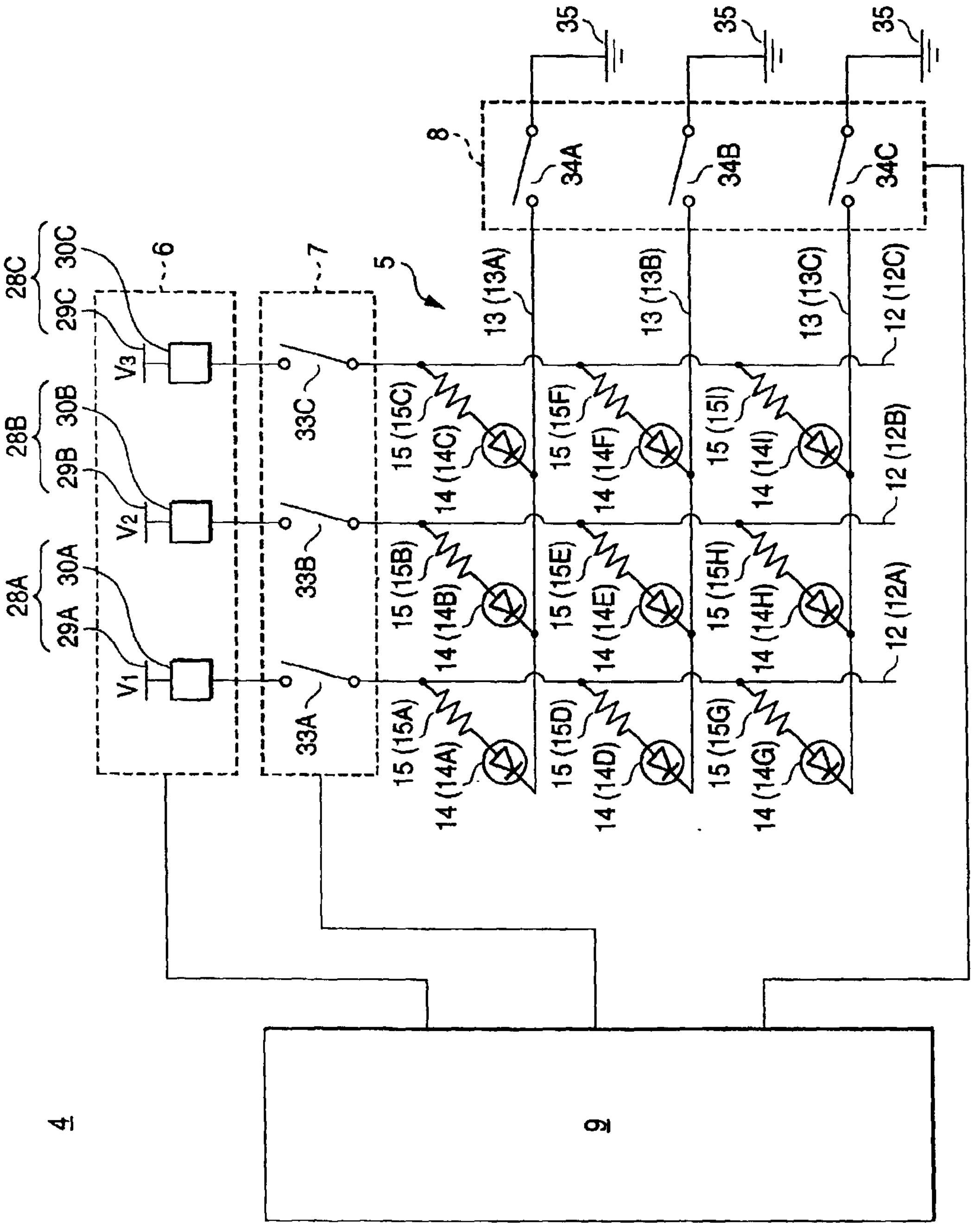
4
9
6
7
5
8
28A
28B
28C
29A
30A
29B
30B
29C
30C
V1
V2
V3
33A
33B
33C
34A
34B
34C
35
35
35
12 (12A)
12 (12B)
12 (12C)
13 (13A)
13 (13B)
13 (13C)
14 (14A)
14 (14B)
14 (14C)
14 (14D)
14 (14E)
14 (14F)
14 (14G)
14 (14H)
14 (14I)
15 (15A)
15 (15B)
15 (15C)
15 (15D)
15 (15E)
15 (15F)
15 (15G)
15 (15H)
15 (15I)

FIG. 11

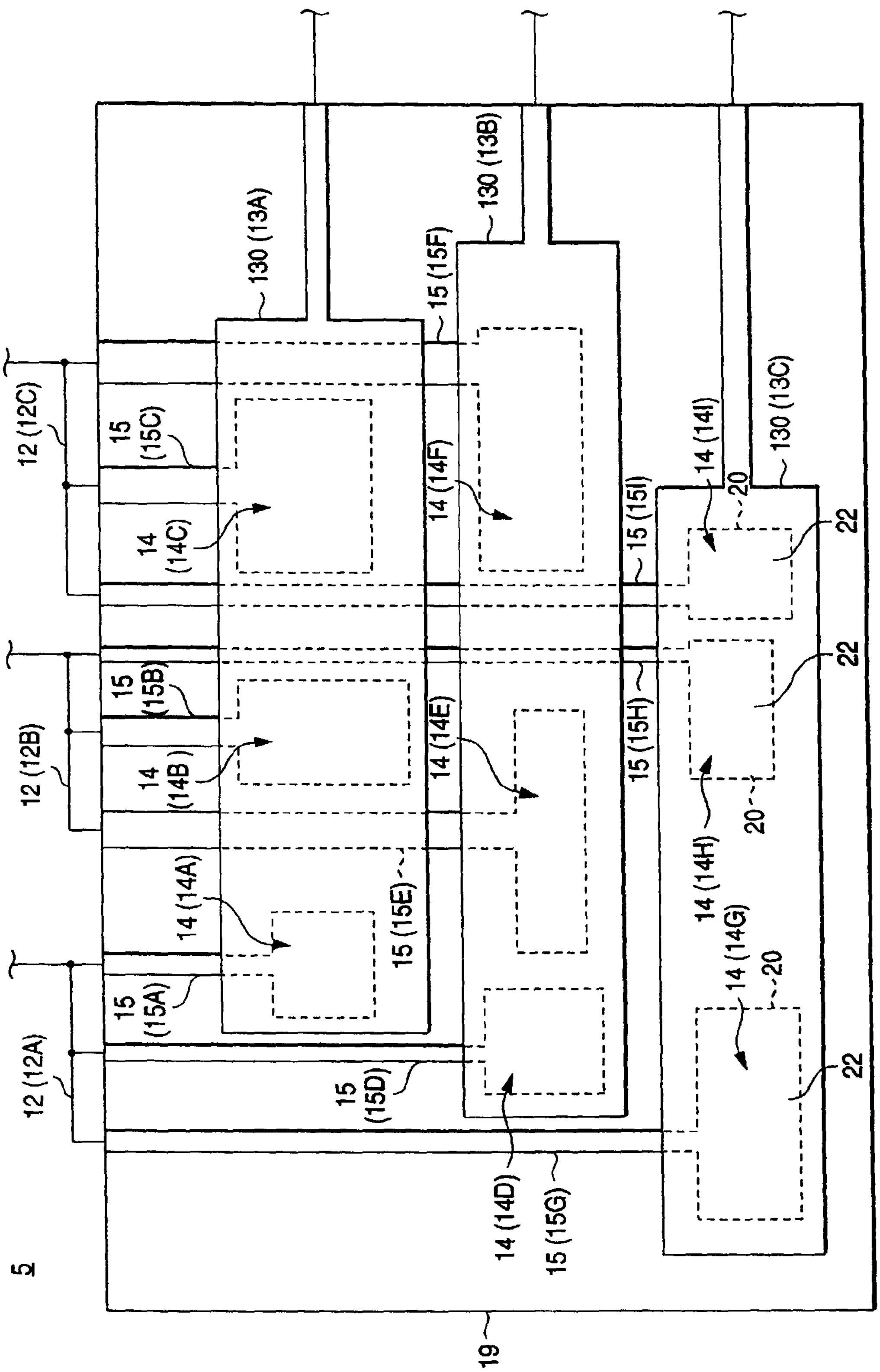
5
12 (12A)
12 (12B)
12 (12C)
15 (15A)
15 (15B)
15 (15C)
15 (15D)
15 (15E)
15 (15F)
15 (15G)
15 (15H)
15 (15I)
14 (14A)
14 (14B)
14 (14C)
14 (14D)
14 (14E)
14 (14F)
14 (14G)
14 (14H)
14 (14I)
130 (13A)
130 (13B)
130 (13C)
20
22
19

FIG. 12

| DISPLAY SEGMENT | DRIVE VOLTAGE VALUE V |
|---|---|
| 14A | k1 x V1 |
| 14D | k2 x V1 |
| 14G | k3 x V1 |

| DISPLAY SEGMENT | DRIVE VOLTAGE VALUE V |
|---|---|
| 14B | k1 x V2 |
| 14E | k2 x V2 |
| 14H | k3 x V2 |

| DISPLAY SEGMENT | DRIVE VOLTAGE VALUE V |
|---|---|
| 14C | k1 x V3 |
| 14F | k2 x V3 |
| 14I | k3 x V3 |

FIG. 13

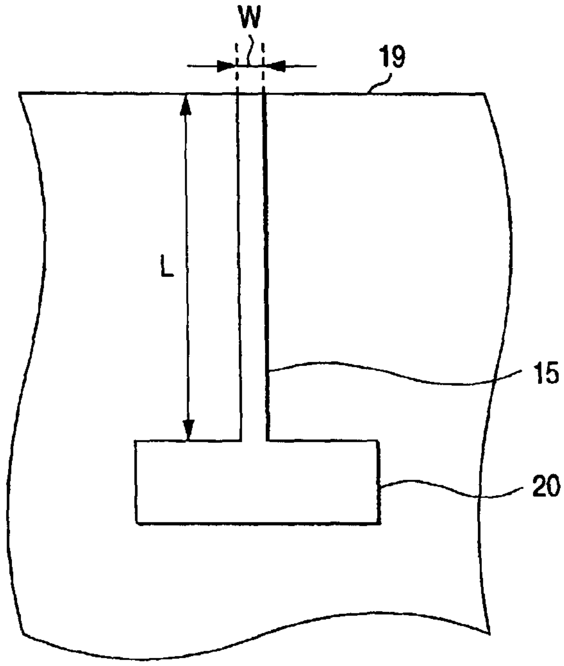
W
19
L
15
20

FIG. 14

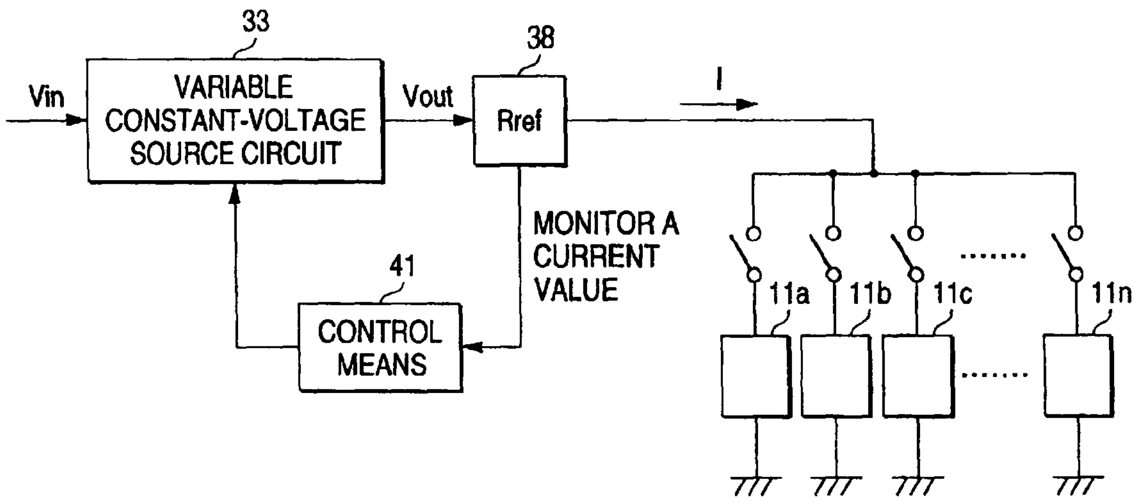
33
VARIABLE
CONSTANT-VOLTAGE
SOURCE CIRCUIT
Vin
Vout
38
Rref
I
MONITOR A
CURRENT
VALUE
41
CONTROL
MEANS
11a
11b
11c
11n

FIG. 15

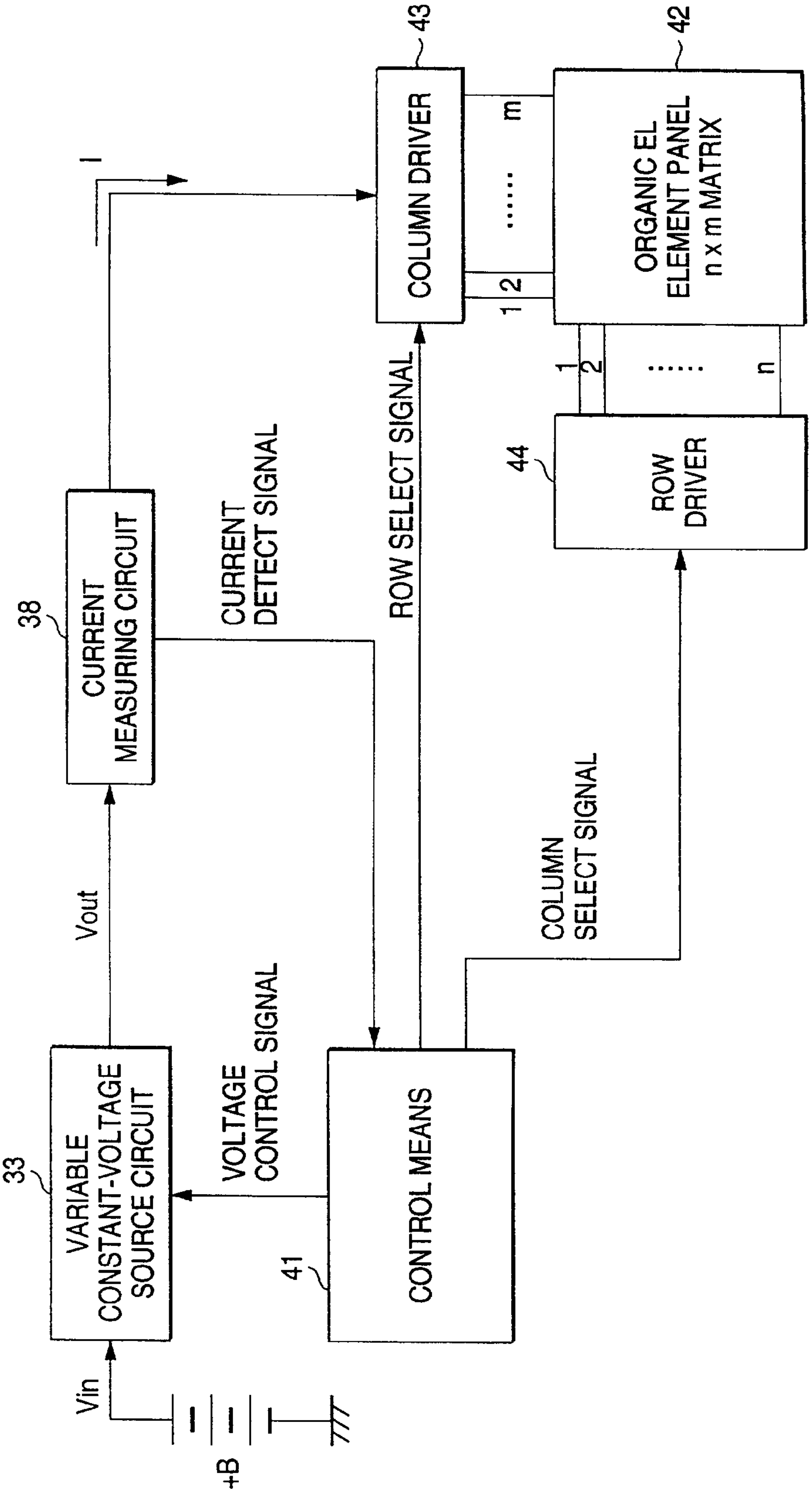
43
COLUMN DRIVER
42
ORGANIC EL
ELEMENT PANEL
n x m MATRIX
I
m
......
1 2
1
2
......
n
44
ROW
DRIVER
38
CURRENT
MEASURING CIRCUIT
CURRENT
DETECT SIGNAL
ROW SELECT SIGNAL
Vout
COLUMN
SELECT SIGNAL
VOLTAGE
CONTROL SIGNAL
33
VARIABLE
CONSTANT-VOLTAGE
SOURCE CIRCUIT
41
CONTROL MEANS
Vin
+B

FIG. 16

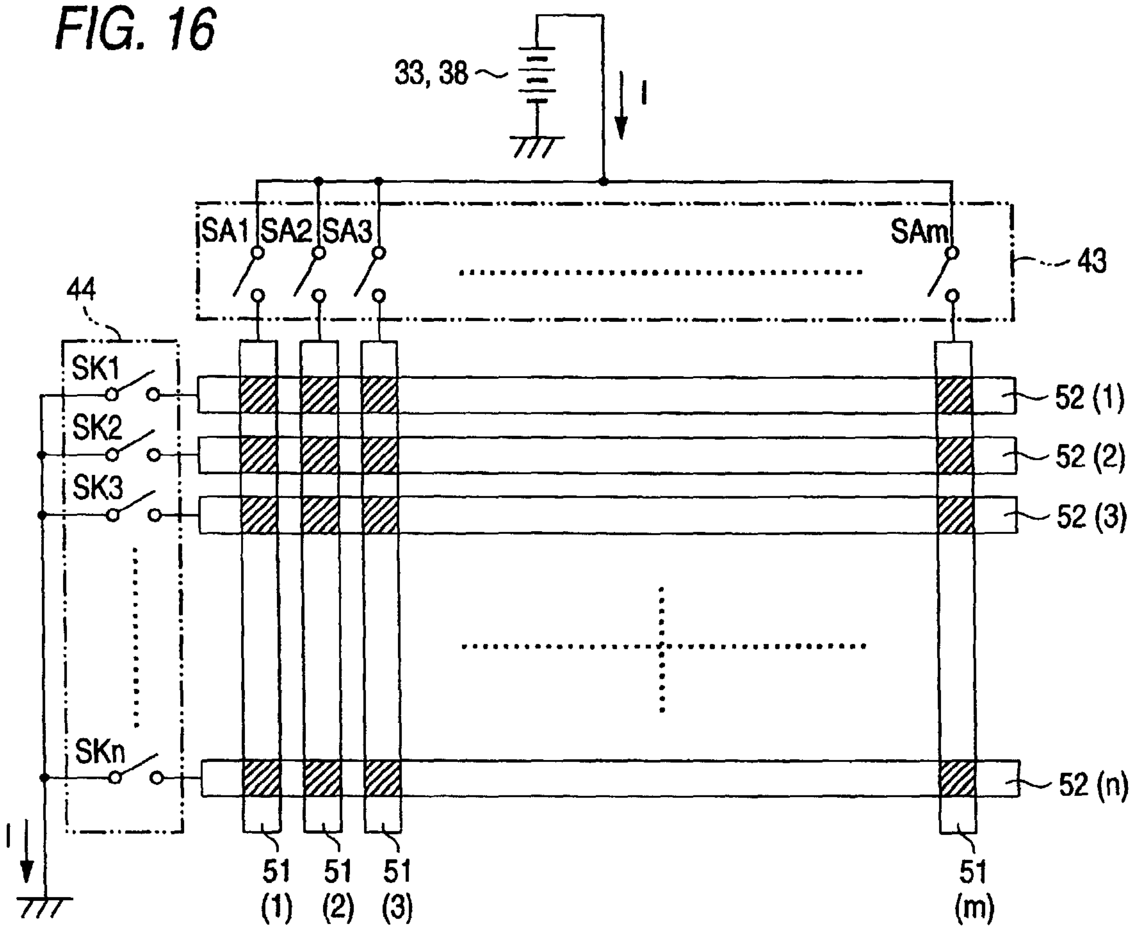
33, 38
I
SA1
SA2
SA3
SAm
43
44
SK1
SK2
SK3
SKn
52 (1)
52 (2)
52 (3)
52 (n)
I
51 (1)
51 (2)
51 (3)
51 (m)

FIG. 17

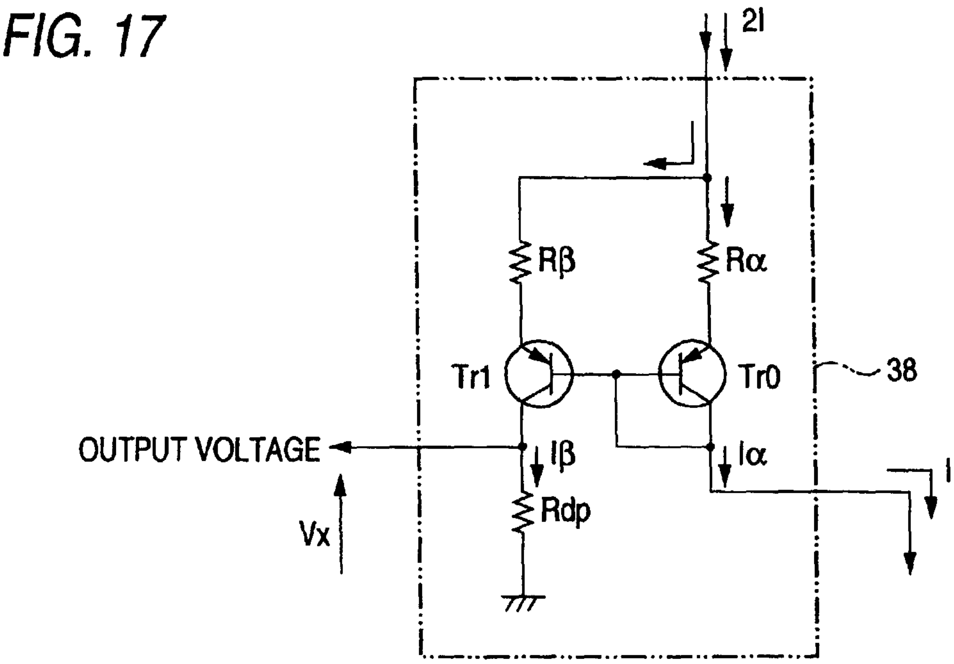
2I
Rβ
Rα
Tr1
Tr0
38
OUTPUT VOLTAGE
Iβ
Iα
I
Rdp
Vx

*FIG. 18*

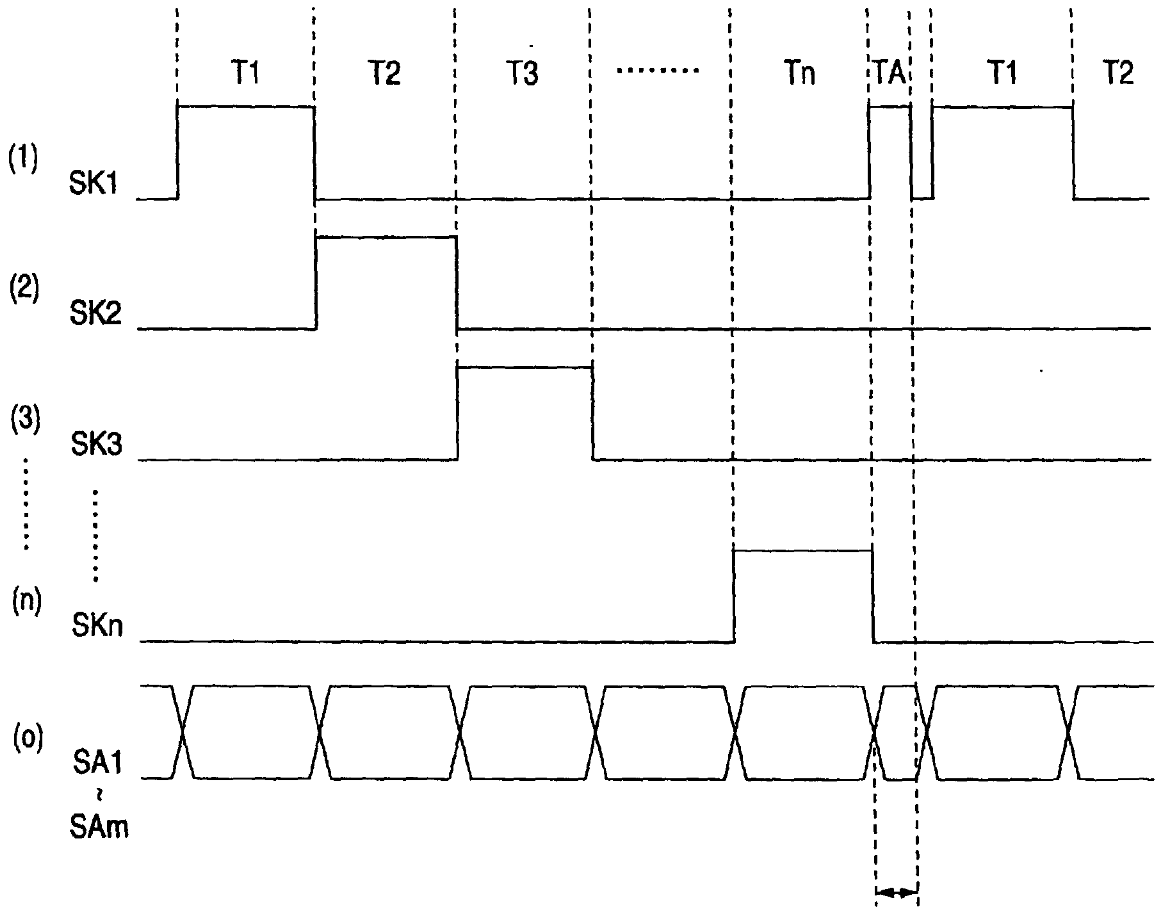

FIG. 19

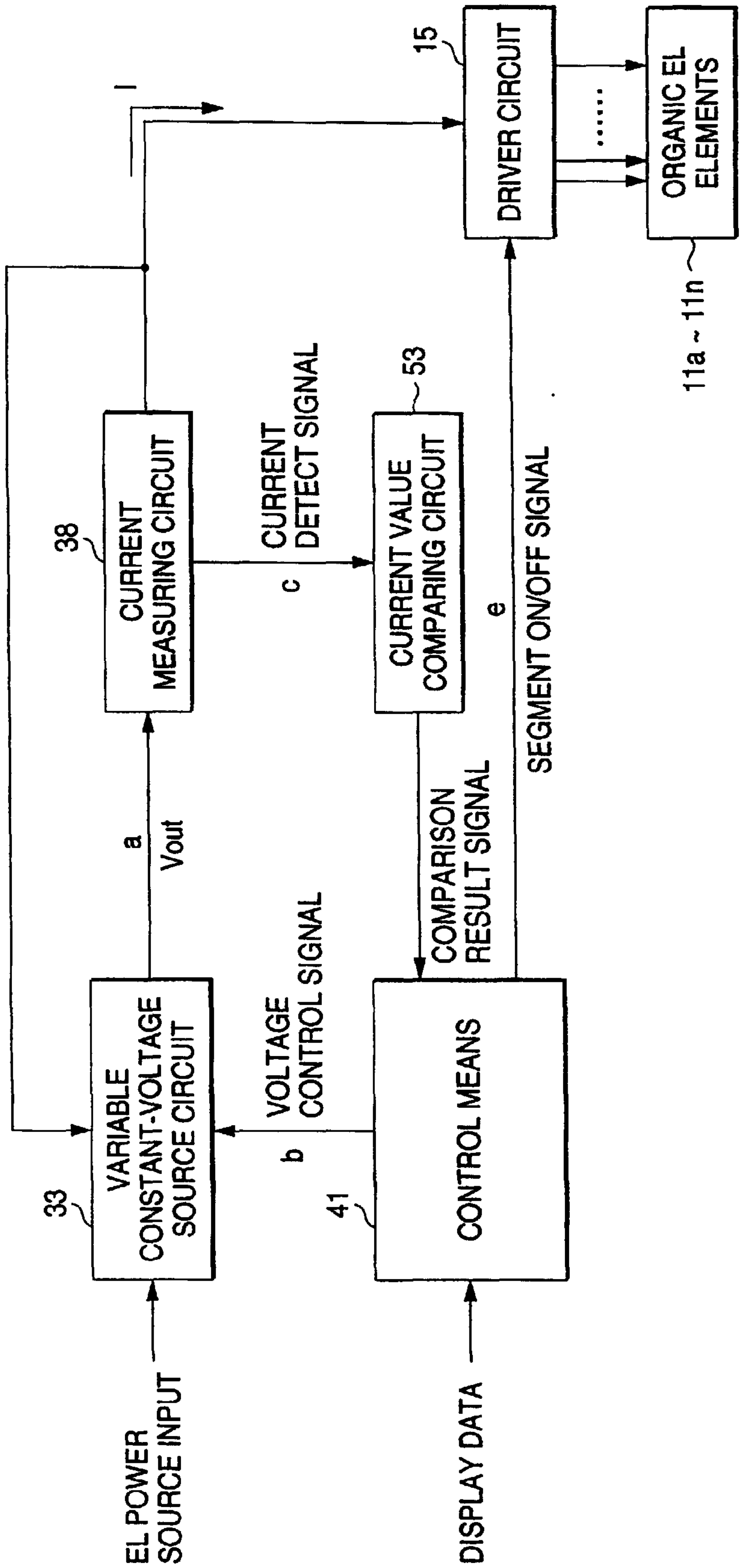
EL POWER SOURCE INPUT
33
VARIABLE CONSTANT-VOLTAGE SOURCE CIRCUIT
a
Vout
38
CURRENT MEASURING CIRCUIT
a
I
15
DRIVER CIRCUIT
ORGANIC EL ELEMENTS
11a ~ 11n
c
CURRENT DETECT SIGNAL
53
CURRENT VALUE COMPARING CIRCUIT
b
VOLTAGE CONTROL SIGNAL
41
CONTROL MEANS
COMPARISON RESULT SIGNAL
e
SEGMENT ON/OFF SIGNAL
DISPLAY DATA

FIG. 20

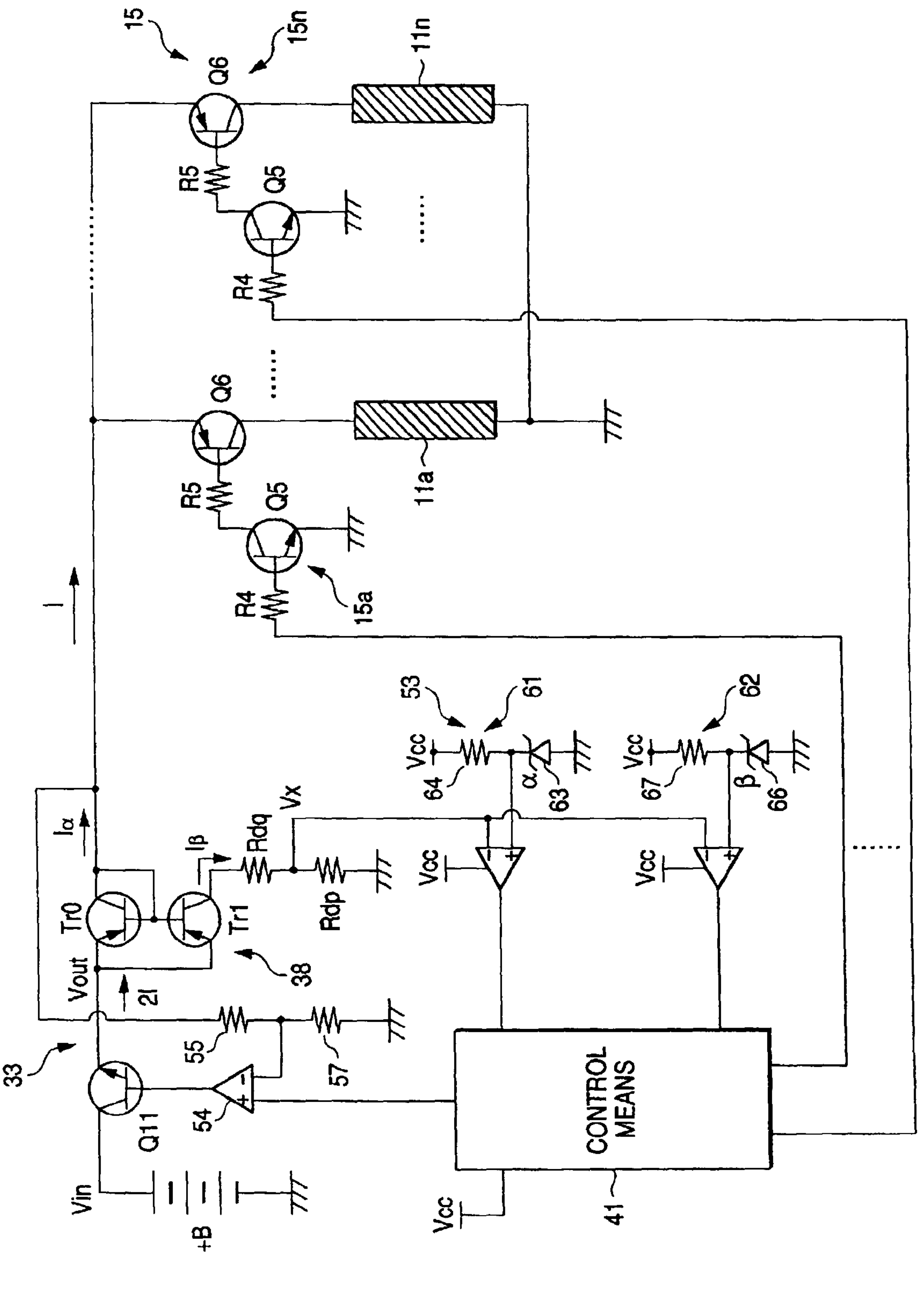

15
15n
Q6
R5
Q5
R4
11n
11a
15a
I
Iα
Iβ
Tr0
Tr1
Rdq
Rdp
Vx
Vout
2I
38
33
Q11
Vin
+B
55
57
54
53
61
62
64
67
63
66
α
β
Vcc
CONTROL MEANS
41

FIG. 21

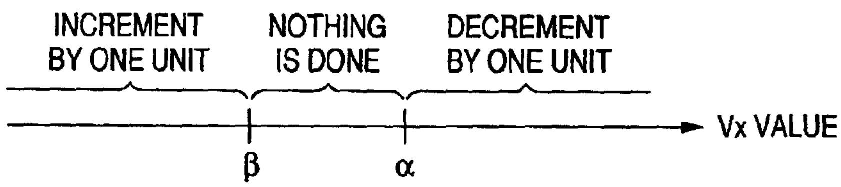


FIG. 22A

FIG. 22B

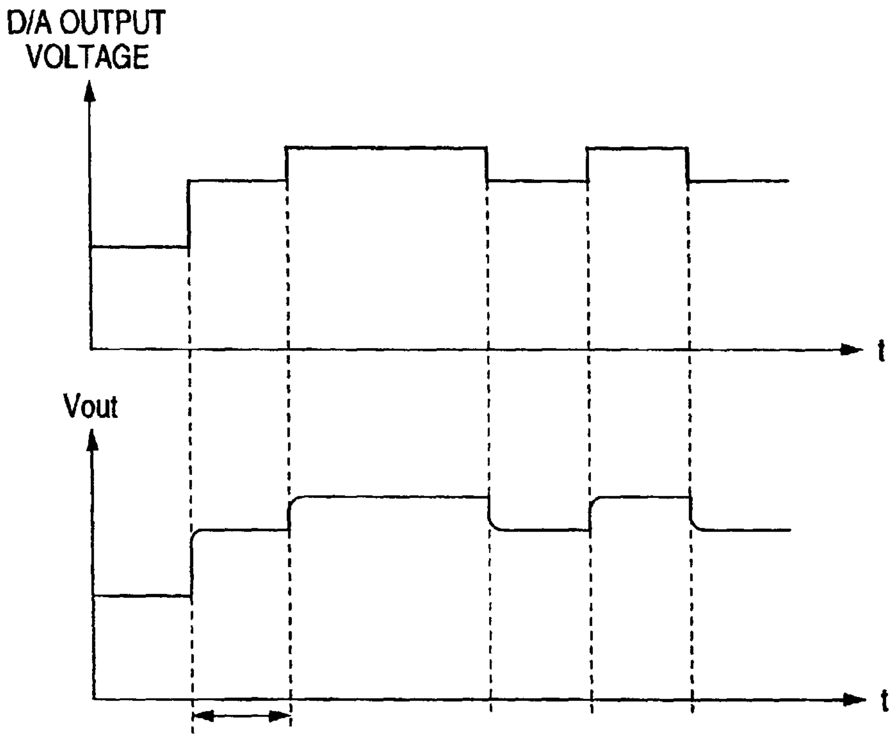


FIG. 23

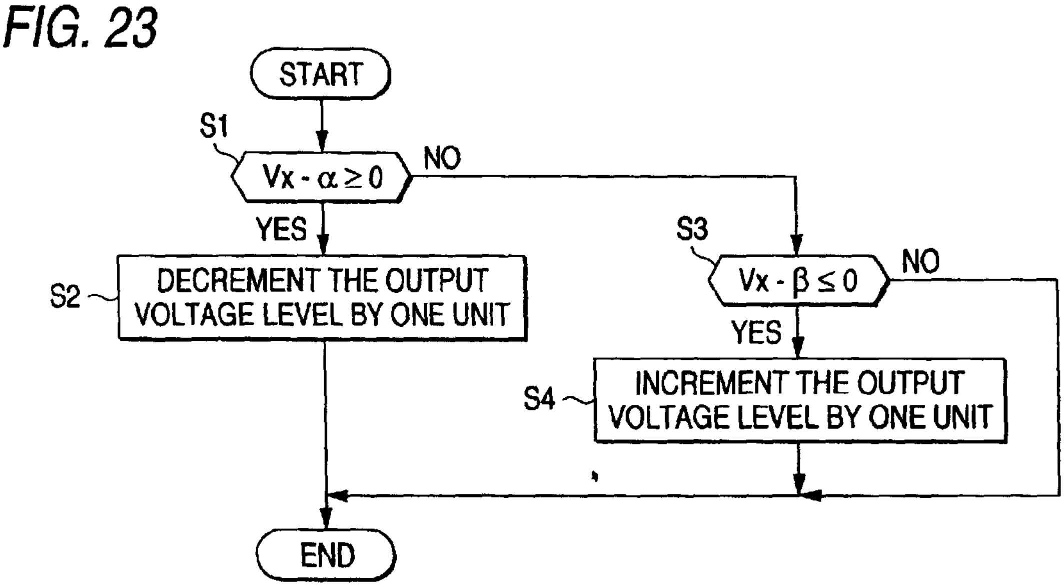

FIG. 24

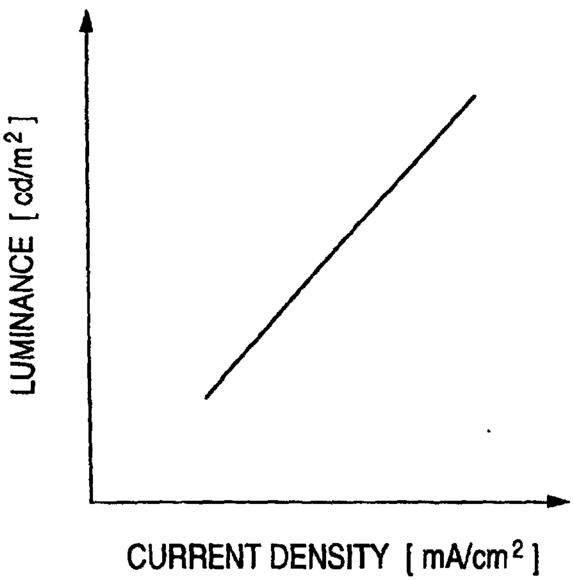


FIG. 25

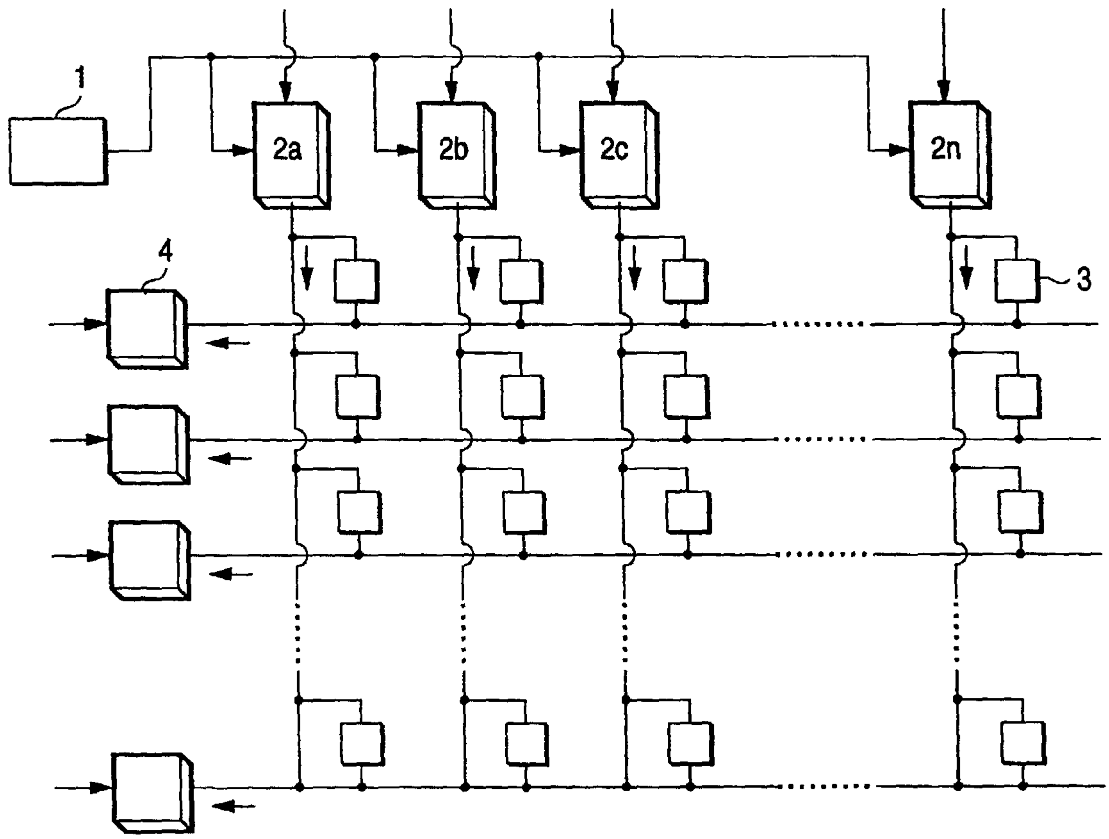

FIG. 26

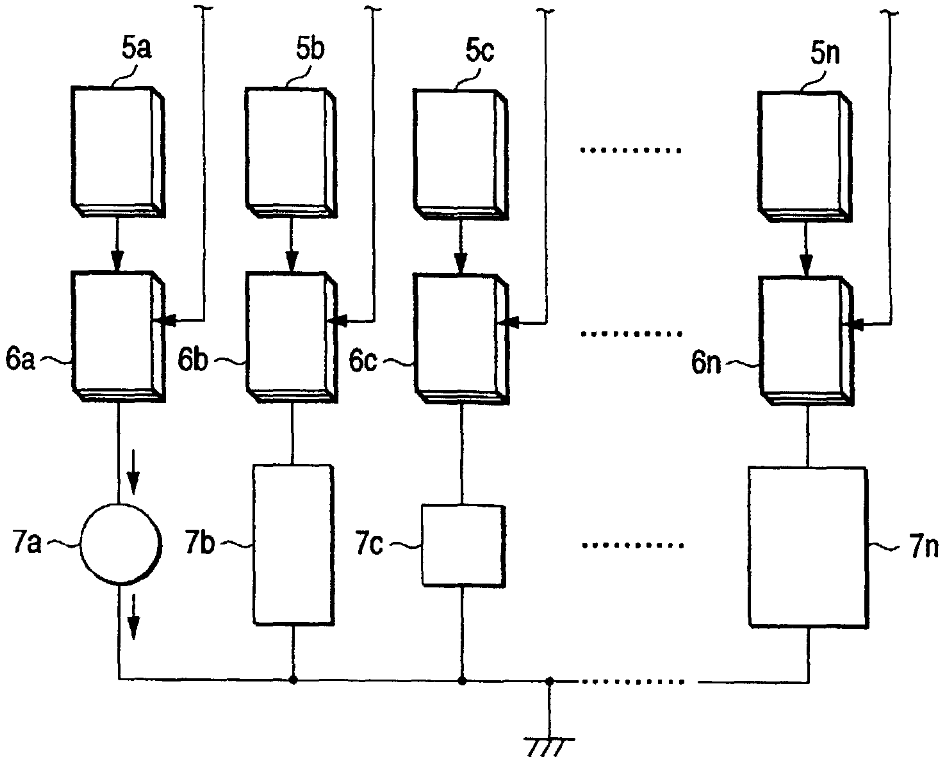
5a
5b
5c
5n
6a
6b
6c
6n
7a
7b
7c
7n

FIG. 27

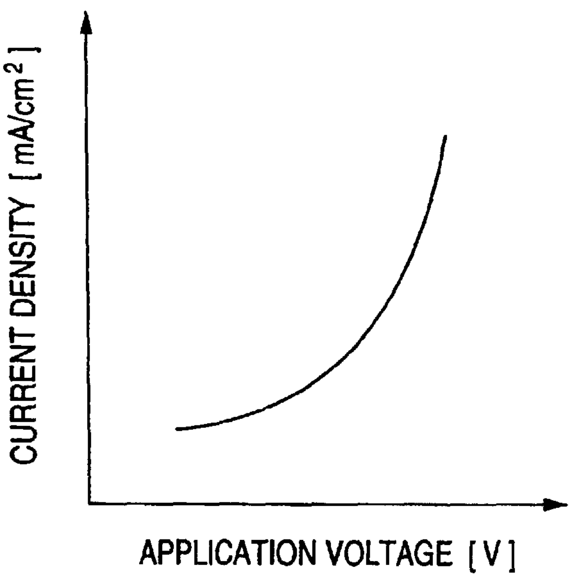
CURRENT DENSITY [ mA/cm2 ]
APPLICATION VOLTAGE [ V ]

FIG. 28

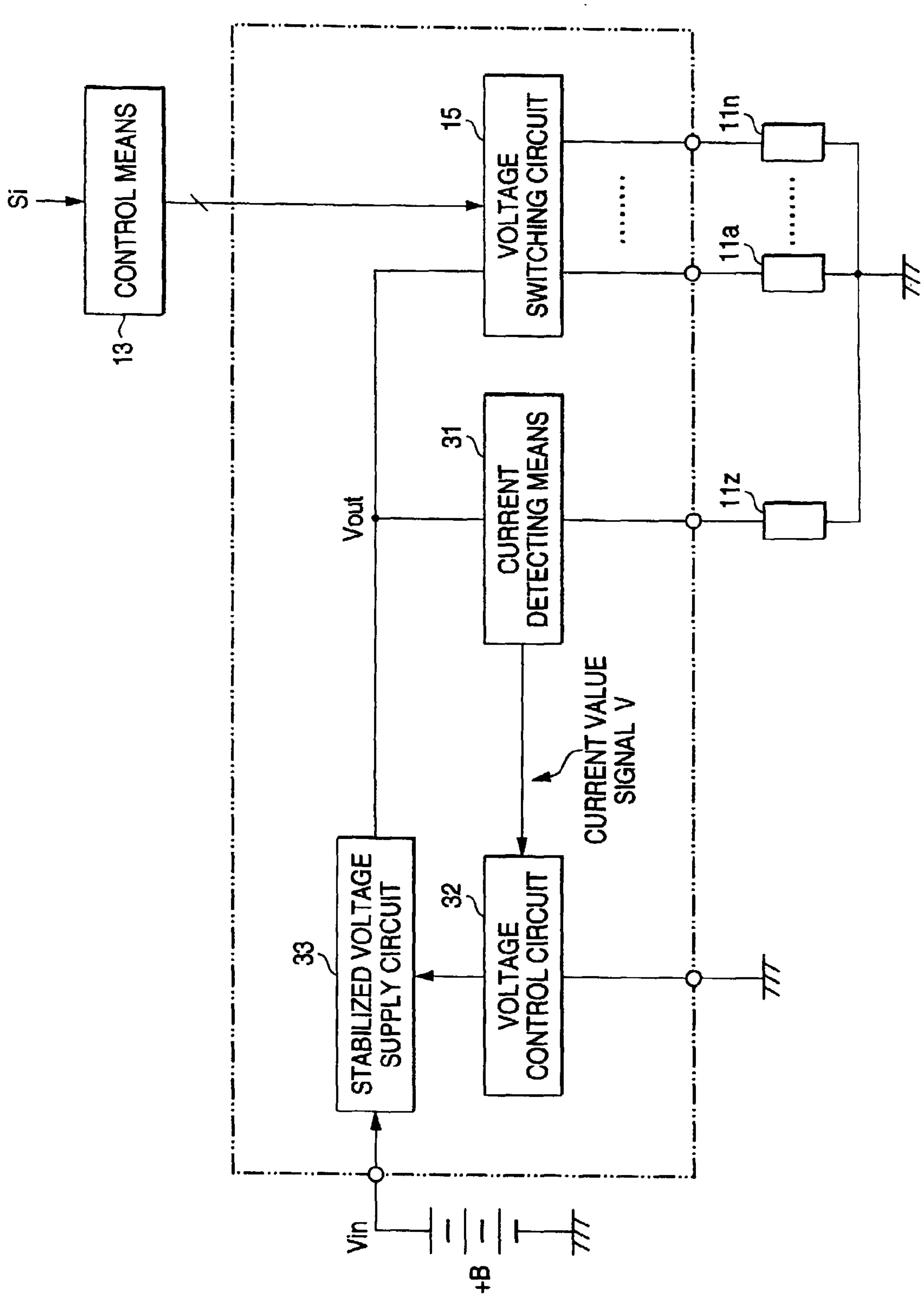
Si
CONTROL MEANS
13
VOLTAGE SWITCHING CIRCUIT
15
CURRENT DETECTING MEANS
31
Vout
CURRENT VALUE SIGNAL V
VOLTAGE CONTROL CIRCUIT
32
STABILIZED VOLTAGE SUPPLY CIRCUIT
33
Vin
+B
11n
11a
11z

FIG. 29

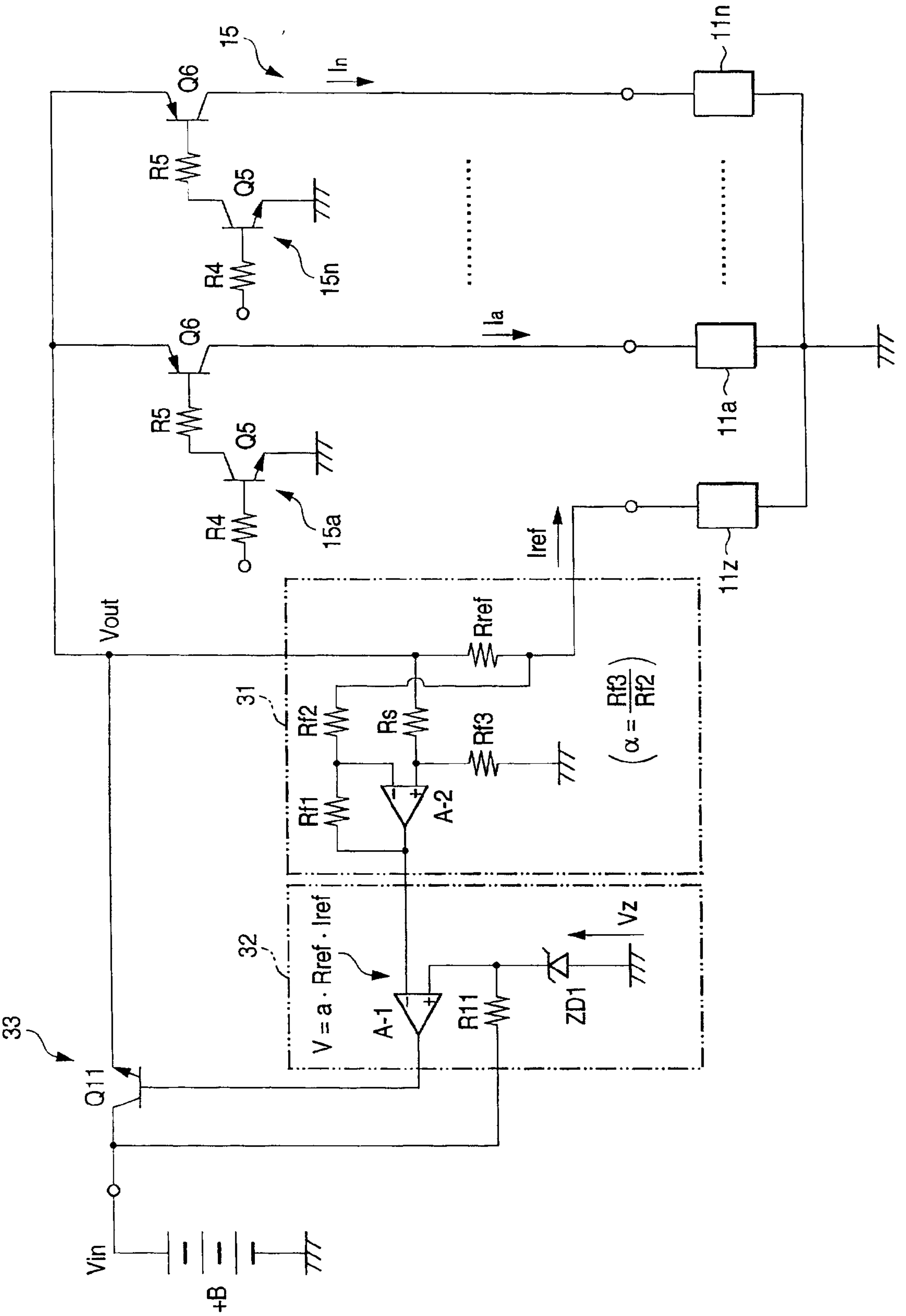
15
Q6
In
11n
R5
Q5
R4
15n
Ia
Q6
R5
Q5
R4
15a
11a
Iref
11z
Vout
Rref
31
Rf2
Rs
Rf3
(α = Rf3/Rf2)
Rf1
A-2
32
V = a · Rref · Iref
Vz
A-1
R11
ZD1
33
Q11
Vin
+B

European Patent Office

# EUROPEAN SEARCH REPORT

Application Number
EP 00 11 7930

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98 52182 A (UNISPLAY SA ;SALAM HASSAN PADDY ABDEL (GB)) 19 November 1998 (1998-11-19) * page 3, last paragraph - page 5, paragraph 3 * * page 7, paragraph 3 - page 11, paragraph 1 * * page 12, paragraph 5 - page 14, paragraph 3 * | 1,4,6,8,9 | G09G3/32 G09G3/14 |
| X | JP 09 305145 A (FUJI ELECTRIC CO LTD) 28 November 1997 (1997-11-28) -& US 5 949 194 A (KAWAKAMI HARUO ET AL) 7 September 1999 (1999-09-07) * column 3, line 64 - column 6, line 12 * | 10,12,14 | |
| X | EP 0 923 067 A (SEIKO EPSON CORP) 16 June 1999 (1999-06-16) | 6,7 | |
| A | * column 25, line 58 - column 33, line 50 * | 12,14 | |
| | | | TECHNICAL FIELDS SEARCHED (Int.Cl.7) |
| | | | G09G |

The present search report has been drawn up for all claims

| Place of search | Date of completion of the search | Examiner |
|---|---|---|
| THE HAGUE | 14 December 2000 | Amian, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 00 11 7930

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2000

| Patent document cited in search report | Publication date | Patent family member(s) | Publication date |
|---|---|---|---|
| WO 9852182 A | 19-11-1998 | NONE | |
| JP 09305145 A | 28-11-1997 | US 5949194 A | 07-09-1999 |
| EP 0923067 A | 16-06-1999 | WO 9840871 A | 17-09-1998 |

EPO FORM P0459

For more details about this annex : see Official Journal of the European Patent Office, No. 12/82